# FASCICULE DE BREVET EUROPEEN

(11) **EP 3 405 305 B1**
(45) Date de publication et mention de la délivrance du brevet: **19.08.2026**
(21) Numéro de dépôt: 17701095.6
(22) Date de dépôt: 17.01.2017
(51) Int. Cl.: B23B 49/00, B23Q 17/09, G05B 19/4065

(54) **PROCÉDÉ DE DÉTERMINATION DE L'ÉTAT D'USAGE D'UN FORET, ET DISPOSITIF CORRESPONDANT**
VERFAHREN ZUR BESTIMMUNG DES VERSCHLEISSZUSTANDS EINES BOHRERS UND ENTSPRECHENDE VORRICHTUNG
METHOF FOR DETERMINING THE WEAR STATE OF A DRILL BIT, AND CORRESPONDING DEVICE

(30) Priorité: 20.01.2016 FR 1650440
(43) Date de publication de la demande: 28.11.2018
(73) Titulaire: Seti-Tec, 77185 Lognes (FR)
(72) Inventeur: PEREIRA, Sébastien, 94210 Saint Maur des Fosses (FR)
(74) Mandataire: Vidon Brevets & Stratégie
(86) Numéro de dépôt international: PCT/EP2017/050900
(87) Numéro de publication internationale: WO 2017/125392

(56) Documents cités:
- EP-A1- 1 449 615
- FR-A1- 2 548 070
- US-A- 5 780 725
- US-A1- 2003 182 014

## Description

### 1. Domaine de l'invention

Le domaine de l'invention est celui des techniques de perçage d'éléments à percer, et celui du contrôle de l'usure des outils de coupe mis en œuvre à cet effet.

L'invention concerne en particulier les procédés et les dispositifs de contrôle de l'usure des forets.

### 2. Art antérieur

Le document EP 1 449 615 A1 divulgue un procédé selon le préambule de la revendication 1 et un dispositif selon le préambule de la revendication 11.

Différents dispositifs de perçage sont couramment mis en œuvre dans l'industrie, comme par exemple dans l'industrie aéronautique, pour réaliser le perçage d'élément à percer.

Ces dispositifs comprennent classiquement un arbre de sortie auquel est solidarisé de manière amovible un outil de coupe comme un foret. Au rang de ces dispositifs de perçage figurent notamment :
- les perceuses manuelles au cours de la mise en œuvre desquelles la poussée sur le foret est générée manuellement ;
- les perceuses au cours de la mise en œuvre desquelles l'avance du foret est motorisée, leur corps étant fixé à un support durant le perçage et déplacé manuellement par un opérateur d'un point de perçage à un autre ; au rang de ces perceuses figurent :
   - les perceuses à avance automatique pour lesquelles la vitesse d'avance et la fréquence de rotation du foret sont dépendants, et
   - les perceuses à paramètres de coupe contrôlés pour lesquelles la vitesse d'avance et la fréquence de rotation du foret peuvent varier indépendamment l'une de l'autre ;
- les robots de perçage, assimilables à des machines-outils, au cours de la mise en œuvre desquels, la fréquence de rotation et la vitesse d'avance du foret peuvent être contrôlées indépendamment l'une de l'autre comme pour les perceuses à paramètres de coupe contrôlés.

La présente invention est plus particulièrement destinée à être mise en œuvre dans le cadre des perceuses à paramètres de coupe contrôlés et des robots de perçage. De tels dispositifs de perçage, encore appelés dispositifs de perçage à paramètres de coupe contrôlés, sont reliés à un boitier de commande contenant notamment le programme de perçage, c'est-à-dire toutes les informations permettant de mettre en œuvre une stratégie de perçage de manière automatique.

Ces dispositifs de perçage peuvent être mis en œuvre pour assurer le perçage d'élément à percer réalisés dans une ou plusieurs couches de matières différentes. Au rang de ces matières figurent notamment les alliages d'aluminium, les alliages de titane, la fibre de carbone stratifiée, le GLARE (pour « *Glass Laminate Aluminium Reinforced Epoxy »* en langue anglaise), l'acier inoxydable, l'Inconel...

Chacun de ces matériaux est notamment utilisé en raison de ses caractéristiques de tenue mécanique, thermique ou chimique et requiert des paramètres de coupe (notamment vitesses de coupe et/ou d'avance) propre de manière à être percés de manière optimale. Ces matériaux peuvent être associés en couches superposées auquel cas le foret traversera successivement différents matériaux au cours d'un perçage.

Au cours d'un perçage, des efforts sont générés sur le foret. Celui-ci tend donc à s'user au fil des perçages.

Un perçage comprend de façon générale :
- une entrée en pleine matière comprenant une phase de centrage et de stabilisation du foret au cours de laquelle la pointe du foret entre dans la matière de l'élément à percer et l'axe de rotation du foret devient stable par rapport à l'élément à percer ;
- une phase de perçage en pleine matière qui commence après le centrage et la stabilisation du foret alors que ses becs de coupe ont pénétré l'élément à percer.

L'usure des forets est accentuée par leur entrée en pleine matière pendant les phases de centrage et de stabilisation.

L'usure des forets a un impact sur les qualités des perçages qui sont réalisés en les mettant en œuvre.

Les critères de qualité d'un perçage comprennent notamment :
- les tolérances sur le diamètre du perçage ;
- l'état de surface des parois du perçage ;
- la perpendicularité de l'axe du perçage par rapport à la paroi à percer ;
- la cylindricité du perçage ;
- la localisation du perçage ;
- la taille de la bavure formée sur l'élément à percer à l'issue d'un perçage ;
- le délaminage en sortie d'un trou réalisé à travers de la fibre de carbone.

Aussi l'état d'usure des forets doit être surveillé pour éviter :
- qu'un foret usé ne soit utilisé pour réaliser des perçages : ceci conduit à la réalisation de perçages ne respectant pas les critères de qualité requis ;
- qu'un foret non encore usé soit remplacé prématurément alors qu'il pourrait encore permettre la réalisation de perçage de qualité : ceci induit une consommation excessive de foret et des coûts d'outillage importants.

Afin de contrôler l'état d'usure des forets, il est connu d'équiper les dispositifs de perçage pneumatiques à paramètres de coupe contrôlés d'un compteur de cycles.

Un compteur de cycles permet de compter le nombre de départ de cycle de perçage réalisé avec un dispositif de perçage. Chaque foret est caractérisé par un nombre limite de cycles de perçage au-delà duquel il doit être remplacé. Sachant qu'un même foret peut être utilisé pour réaliser des cycles de perçage différents notamment en terme de matière(s) percée(s), le nombre de cycles limite est prédéterminé expérimentalement en tenant compte des conditions d'utilisation les plus difficiles que rencontrera le foret au cours de son utilisation. Pour cela, on réalise en laboratoire des perçages successifs au moyen d'un foret dans la matière la plus difficile à percer parmi celles qu'il sera amené à percer. A l'issu de chaque perçage, un contrôle est réalisé :
- des critères représentatifs de la qualité du trou (tolérances géométriques et dimensionnelles) ;
- de la dégradation de l'acuité de l'arête de coupe du foret ;
- de l'usure des faces de dépouille et des faces de coupe du foret ;
- de l'ébrèchement de l'arête de coupe du foret.

Dès qu'un de ces paramètres traduisant l'usure du foret atteint une valeur à partir de laquelle le foret est considéré usé, le nombre de cycles réalisés avec le foret pour atteindre ce niveau d'usure est enregistré comme nombre de cycles limite.

En production, dès que le nombre de cycles de perçage réalisés avec un foret atteint le nombre de cycles limite de celui-ci, alors le foret est remplacé.

Ce type de surveillance n'est pas optimal.

En effet, les structures à percer en production sont complexes. Il peut par exemple s'agir d'aile ou autres structures d'avions composées de superposition de couches de matériaux différents. Afin d'optimiser la structure des avions et en particulier d'en réduire le poids, les matériaux employés et leur épaisseurs varient d'un endroit à un autre de façon à renforcer davantage la structure là où les sollicitations sont les plus élevées et à ne pas surdimensionner les autres. Il en résulte qu'il n'est pas possible de connaître avec précision, à chaque perçage en production, la nature exacte de la structure percée en terme de matériaux et d'épaisseurs de couches.

Il résulte de cette complexité l'impossibilité de réaliser les essais de qualification d'un foret un procédant au perçage en laboratoire d'échantillons de structures identiques en terme de matériaux et d'épaisseur de couches aux structures qui seront percer en production. Au contraire, les essais de qualification d'un foret ont lieu en réalisant des perçages en choisissant le cas le plus défavorable comme référence. Pour cela, les perçages sont réalisés à travers des plaques d'épaisseur constante avec un empilement de matière donné correspondant au cas de perçage en production le plus défavorable.

Ceci conduit à remplacer les forets prématurément dans la mesure où tous les perçages ne sont pas réalisés en production dans le plus défavorable des cas.

Ce type de surveillance n'est pas non plus optimal du fait qu'il ne prend notamment pas en considération :
- la nature du ou des matériaux percés et en particulier leur effet abrasif ;
- la profondeur percée ;
- les vitesses de coupe et d'avance ;
- la mise en œuvre ou non d'une lubrification ;
- ...

Pourtant, le pouvoir d'usure de chacun des matériaux exercé sur les forets est différent. En effet, chacun des matériaux exerce sur le foret au cours d'un perçage des efforts de coupe (couple selon l'axe de rotation du foret et/ou poussée longitudinale selon l'axe de rotation du foret) et/ou un effet abrasif différent.

Le titane a un effet ébréchant sur la pointe et sur les becs de coupe des forets. Le perçage d'un élément en titane peut ainsi conduire la pointe du foret utilisée à cet effet à s'ébrécher. Le perçage d'un trou au moyen d'un foret dont la pointe est endommagée induit un mauvais centrage du foret et peut en conséquence conduire à la génération d'un trou de mauvaise qualité ne respectant pas les tolérances dimensionnelles et géométriques requises.

La fibre de carbone est abrasive et tend à émousser les becs de coupe des forets.

Les alliages d'aluminium peuvent générer un copeau adhérant sur le foret et/ou user le revêtement du foret.

Par conséquent, le fait conditionner le remplacement de forets sur la base du nombre de cycles au cours desquels ils ont été utilisés et des conditions d'utilisation les plus difficiles, sans tenir compte à proprement parler du pouvoir d'usure des matériaux réellement percés au cours des cycles de perçage ne permet pas une gestion optimisée du remplacement des forets. Elle conduit au contraire à procéder au remplacement de forets non encore usés.En outre, il se peut que par inadvertance, des cycles de perçage soient lancés de manière intempestive et soient stoppés avant même que le foret n'entame le perçage correspondant. L'utilisation de compteur de cycles conduit dans ce cas à comptabiliser les cycles intempestifs et ainsi au remplacement prématuré des forets.

L'apparition des perceuses électriques à paramètres de coupe contrôlés a permis de maitriser et de mesurer en temps réel différents paramètres au cours d'un perçage, tels que notamment :
- la vitesse de rotation foret ;
- la vitesse d'avance foret ;
- le contrôle de la lubrification, marche arrêt et débit ;
- la détection des faces d'entrée et de sortie des pièces à percer ;
- la détection des changements de matériaux;
- la force de poussée sur le foret ;
- le couple d'entrainement du foret.

Il a ainsi été envisagé d'évaluer l'usure d'un foret à partir d'une mesure des efforts auxquels il est soumis au cours de son utilisation.

Toutefois, certains matériaux peuvent présenter des pouvoirs abrasifs différents sans pour autant engendrer des efforts différents sur un foret au cours de leur perçage.

La prise en compte des efforts exercés sur un foret au cours de perçages n'est donc pas suffisante pour évaluer de manière correcte la sollicitation des forets et en déduire leur niveau d'usure.

Il existe donc un besoin en une technique qui permette d'optimiser le remplacement des forets afin d'en réduire la consommation, c'est-à-dire qui permettent de conduire à leur remplacement uniquement lorsque cela est nécessaire.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir une technique d'évaluation de l'usure d'un foret qui permette d'optimiser l'utilisation du foret en évitant :
- son remplacement prématuré alors qu'il est encore en état de réaliser des perçages conformes aux critères de qualité requis, ou
- son remplacement tardif alors que son utilisation conduirait à la génération de trous non conformes aux critères de qualité requis.

Un autre objectif de l'invention est de procurer, dans au moins un mode de réalisation, une telle technique qui permette d'optimiser la gestion d'un parc d'outil de coupe, en particulier le renouvellement des forets, en fournissant pour chacun de ces outils un niveau d'usure.

Encore un objectif de l'invention est de procurer, dans au moins un mode de réalisation, une telle technique qui permette d'éviter une dégradation de la qualité de perçages.

Un autre objectif de l'invention est, selon au moins un mode de réalisation, de fournir une telle technique qui soit simple et/ou fiable et/ou efficace.

### 4. Présentation de l'invention

Pour ceci, l'invention propose un procédé d'évaluation de l'usure d'un foret tout au long de son utilisation pour effectuer le perçage d'éléments à percer constitués d'au moins une couche et d'au moins une matière selon la revendication 1, l'usure dudit foret traduisant sa capacité à réaliser un perçage respectant au moins un critère de qualité d'un perçage, ledit procédé comprenant au moins :
- une étape de mesure ou de détection d'au moins un paramètre ayant une incidence sur l'usure dudit foret, ledit paramètre étant choisi dans le groupe comprenant :
   - la profondeur de perçage percée par ledit foret ;
   - l'entrée dudit foret dans un élément à percer ;
- une étape de détermination d'au moins un état d'usage dudit foret, chaque état d'usage étant déterminé en fonction d'un desdits paramètres et étant caractéristique d'un desdits critères de qualité d'un perçage.

L'invention consiste donc à déterminer au moins un état d'usage d'un foret en fonction de la profondeur de perçage percée par celui-ci et/ou du nombre d'entrée en matière de celui-ci, chaque état d'usage étant caractéristique d'un critère de qualité du perçage à réaliser.

Ainsi, chaque foret possède au moins un état d'usage correspondant à un critère de qualité d'un perçage à réaliser. Il est ainsi possible de connaître à chaque instant l'état d'usage d'un foret relatif à un critère de qualité d'un perçage et ainsi de connaître l'aptitude du foret à réaliser ce perçage en respectant le critère de qualité en question.

La connaissance de ce ou ces états d'usage permet ainsi d'optimiser la gestion du stock de forets et de garantir qu'on réalise des perçages de qualité.

Le ou les états d'usage sont déterminés en fonction de la profondeur percée et/ou du nombre d'entrées en matière du foret. Ils sont donc davantage représentatifs du niveau d'usure réel du foret ce qui permet d'éviter de le remplacer prématurément.

Selon une variante possible, chaque état d'usage est associé à un seuil maximal prédéterminé, ledit seuil maximal de chacun desdits état d'usage étant inférieur ou égal à un état d'usage maximal prédéterminé au-delà duquel le critère de qualité dont est caractéristique ledit état d'usage n'est plus rempli.

Le foret n'est alors plus utilisable dès que le seuil maximal est atteint pour au moins un état d'usage

Ainsi, selon cet aspect l'invention repose sur une approche originale qui consiste à déterminer au moins un état d'usage d'un foret, caractéristique d'un desdits critères de qualité d'un perçage, en fonction de la profondeur de perçage réalisée par celui-ci ou du nombre d'entrées de celui-ci dans un élément à percer. En outre, chaque état d'usage est associé à un seuil maximal prédéterminé, ce seuil maximal étant inférieur ou égal, pour chaque état d'usage, à un état d'usage limite admissible au-delà duquel le critère de qualité dont est caractéristique ledit état d'usage n'est plus rempli.

Selon les techniques de l'art antérieur, le seuil limite d'utilisation d'un foret correspond à un nombre de cycles de perçage type, supposé être représentatif des cycles de perçage réellement réalisés, au-delà duquel les critères de qualité requis pour le trou ne sont plus respectés.

Selon une technique différente, l'invention propose de définir le seuil limite d'utilisation d'un foret comme une profondeur de perçage ou un nombre d'entrées dans un élément à percer maximum prédéterminé au cours d'essais et au-delà duquel un critère de qualité (tolérances sur le diamètre, état de surface...) du perçage n'est plus rempli.

Ainsi, selon l'invention, on garantit d'utiliser un foret tant qu'il est en mesure de produire un perçage de qualité.

La technique selon l'invention permet ainsi de garantir :
- la production de perçages de qualité ;
- d'optimiser la consommation de forets dans la mesure où ils sont utilisés tant qu'ils sont capables de produire des perçages de qualité.

Dans une variante possible, chaque état d'usage est associé à un seuil maximal prédéterminé, ladite étape de détermination d'au moins un état d'usage dudit foret comprenant, au cours de la réalisation en production de perçages d'un élément à percer au moyen dudit foret, la qualification dudit foret en tant que :
- « foret serviable » tant que ledit seuil maximal dudit au moins un état d'usage dudit foret n'est pas atteint ;
- « foret hors service » à partir du moment où le seuil maximal d'au moins état d'usage dudit foret est atteint.

Ainsi, tant que le seuil maximal d'au moins un état d'usage n'est pas atteint, le foret est qualifié de serviable, alors que dès lors que le seuil maximal d'au moins un état d'usage est atteint le foret est qualifié hors service.

Selon une variante possible, un procédé selon l'invention comprend une étape d'émission d'un message, par exemple visuel et/ou sonore, indiquant que le foret est hors service dès que la qualification « hors service » est attribuée au foret.

Ceci permettra d'avertir que le foret n'est plus en mesure de réaliser un perçage en respectant les critères de qualité requis. Un opérateur pourra ainsi facilement connaître le moment opportun pour remplacer un foret afin d'utiliser celui-ci tant qu'il est encore utilisable et de le remplacer seulement lorsqu'il ne l'est plus. L'invention permet ainsi d'éviter de dégrader la qualité des perçages réalisés.

Selon l'invention, la détermination d'au moins un état d'usage dudit foret comprend une pondération en fonction de l'effet de l'abrasivité de la ou des matières percées sur l'usure du foret.

Il est ainsi possible de tenir compte de l'effet abrasif des matières percées sur l'usure d'un foret. Cette prise en compte permet d'optimiser encore davantage l'évaluation de l'usure d'un foret.

Dans le cadre de ladite pondération :
- chaque état d'usage est assimilé à un écart par rapport à une valeur souhaitée dudit critère de qualité du perçage correspondant ;
- ledit écart varie en fonction du cumul dudit paramètre correspondant ayant une incidence sur l'usure dudit foret selon une fonction prédéterminée.

Dans ce cas, et selon une variante possible, un procédé selon l'invention comprend une étape d'évaluation préalable en laboratoire d'au moins un type de forets pour au moins une matière, ladite étape d'évaluation comprenant pour chaque type de forets et pour chaque matière :
- la réalisation d'au moins une série de perçages dans des éprouvettes réalisées en ladite matière avec un foret neuf du type considéré à chacune desdites séries ;
- la mesure, après chacun des perçages de ladite au moins une série, de l'écart entre la valeur dudit ou de chacun desdits critères de qualité par rapport à ladite valeur souhaitée correspondant au critère considéré ;
- l'enregistrement, pour ledit ou chacun desdits critères de qualité, de l'écart entre la valeur du critère de qualité considéré par rapport à ladite valeur souhaitée en fonction du cumul du paramètre ayant une incidence sur l'usure dudit foret correspondant au critère de qualité considéré ;
- la poursuite des perçages de ladite au moins une série jusqu'à ce que ledit au moins un critère de qualité ne soit plus rempli ;
- lorsque plusieurs séries de perçages sont réalisées, le calcul pour ledit ou chacun desdits critères de qualité de la moyenne desdits écarts en fonction du cumul du paramètre ayant une incidence sur l'usure dudit foret correspondants au critère de qualité considéré ;
- le calcul pour ledit ou chacun desdits critères de qualité d'une régression polynomiale dudit écart ou de la moyenne desdits écarts en fonction du cumul du paramètre ayant une incidence sur l'usure dudit foret correspondants au critère de qualité considéré, ladite régression polynomiale constituant ladite fonction prédéterminée utilisée dans ladite pondération.

Cette mise en œuvre permet de réaliser une pondération efficace en fonction de l'abrasivité des matières.

Selon une variante possible, une mémoire est associée à chaque foret, ladite étape d'évaluation comprenant une étape d'enregistrement dans la mémoire associée à chaque foret :
- du seuil maximal pour au moins un état d'usage propre à un critère de qualité et à un paramètre ayant une incidence sur l'usure ;
- d'au moins une régression polynomiale :
   - pour une matière donnée ;
   - pour un critère de qualité donné ;
   - pour un paramètre ayant une incidence sur l'usure donné.

Selon une variante possible, un procédé selon l'invention comprend, au cours du perçage d'un élément constitué d'un empilement de couches de matières différentes, une étape de détermination d'au moins un état d'usage dudit foret en fonction de la profondeur de perçage à l'issue du perçage de chacune desdites couches, l'étape de détermination d'au moins un état d'usage dudit foret, propre à un critère de qualité, à l'issue du perçage d'une couche comprenant pour chaque état d'usage les étapes suivantes :
- prise en compte, au début du perçage d'une couche donnée,
   - de l'état d'usage calculé à l'issue du perçage de la couche précédente ;
   - de la régression polynomiale correspondant audit foret, à la matière de la couche donnée, et au critère de qualité auquel correspond l'état d'usage en fonction de la profondeur percée,
   - de la fonction inverse de ladite régression polynomiale,
- calcul d'une première valeur, résultat de ladite fonction inverse appliquée audit état d'usage calculé à l'issue du perçage de la couche précédente ;
- prise en compte de l'épaisseur percée dans ladite couche donnée,
- calcul d'une deuxième valeur, somme de la première valeur et de ladite épaisseur percée dans ladite couche donnée,
- calcul de l'état d'usage de fin de perçage de ladite couche donnée, résultant de ladite régression polynomiale appliquée à la deuxième valeur.

Il est ainsi possible de déterminer des états d'usage plus proches de la réalité en tenant compte de l'abrasivité des matières percées dans le cadre de la prise en considération de la profondeur de perçage.

Selon une variante possible, un procédé selon l'invention comprend des étapes successives de perçage d'éléments à percer comprenant au moins une couche et au moins une matière, la matière d'un élément à percer avec laquelle le foret entre en premier lieu en contact au cours d'une étape de perçage constituant une matière d'attaque, ledit procédé comprenant au cours de chaque étape de perçage d'un élément à percer une étape de détermination d'au moins un état d'usage dudit foret propre à un critère de qualité en fonction de l'entrée dudit foret dans un élément à percer, l'étape de détermination d'au moins un état d'usage dudit foret comprenant pour chaque état d'usage les étapes suivantes :
- prise en compte, lors de la détection de l'entrée dudit foret dans un élément à percer donné,
   - de l'état d'usage calculé lors de la détection de l'entrée dudit foret dans l'élément à percer de l'étape de perçage précédente,
   - de la régression polynomiale correspondant audit foret, à la matière d'attaque dudit élément à percer donné, et au critère de qualité auquel correspond ledit état d'usage en fonction de la détection de l'entrée dudit foret dans un élément à percer,
   - de la fonction inverse de ladite régression polynomiale,
- calcul d'une première valeur, résultant de ladite fonction inverse appliquée audit état d'usage calculé à l'étape de perçage précédente,
- calcul d'une deuxième valeur, somme de la première valeur et de la nouvelle entrée,
- calcul de l'état d'usage de fin de perçage dudit élément à percer donné, résultant de ladite régression polynomiale appliquée à la deuxième valeur.

Il est ainsi possible de déterminer des états d'usage plus proches de la réalité en tenant compte de l'abrasivité des matières percées dans le cadre de la prise en considération du nombre d'entrée en matière d'un foret.

Selon une variante possible, un procédé selon l'invention comprend en outre une étape d'enregistrement dans la mémoire associée à chaque foret au cours de son utilisation pour percer des éléments à percer d'au moins un état d'usage.

Selon une variante possible, ledit au moins un critère de qualité d'un perçage appartient au groupe comprenant :
- les tolérances sur le diamètre du perçage ;
- l'état de surface des parois du perçage ;
- la perpendicularité de l'axe du perçage par rapport à la paroi à percer ;
- la cylindricité du perçage ;
- la localisation du perçage ;
- la taille de la bavure formée sur l'élément à percer à l'issue d'un perçage ;
- le délaminage en sortie d'un trou réalisé à travers de la fibre de carbone.

La présente invention concerne également un dispositif d'évaluation de l'usure d'un foret tout au long de son utilisation pour effectuer le perçage d'éléments à percer constitués d'au moins une couche et d'au moins une matière selon la revendication 11, l'usure dudit foret traduisant sa capacité à réaliser un perçage respectant au moins un critère de qualité d'un perçage, ledit dispositif comprenant au moins :
- des moyens de mesure ou de détection d'au moins un paramètre ayant une incidence sur l'usure dudit foret, ledit paramètre étant choisi dans le groupe comprenant :
   - la profondeur de perçage percée par ledit foret ;
   - l'entrée dudit foret dans un élément à percer ;
- des moyens de détermination d'au moins un état d'usage dudit foret, chaque état d'usage étant déterminé en fonction d'un desdits paramètres et étant caractéristique d'un desdits critères de qualité d'un perçage.

Selon une variante possible, chaque état d'usage est associé à un seuil maximal prédéterminé, ledit seuil maximal de chacun desdits état d'usage étant inférieur ou égal à un état d'usage maximal prédéterminé au-delà duquel le critère de qualité dont est caractéristique ledit état d'usage n'est plus rempli.

Selon une variante possible, un dispositif selon l'invention comprend des moyens de qualification dudit foret en tant que :
- « foret serviable » tant que ledit seuil maximal dudit au moins un état d'usage dudit foret n'est pas atteint ;
- « foret hors service » à partir du moment où le seuil maximal d'au moins état d'usage dudit foret est atteint.

Selon une variante possible, un dispositif selon l'invention comprend comprenant des moyens d'émission d'un message indiquant que le foret est hors service dès que la qualification « hors service » est attribuée au foret.

Selon une variante possible, chaque foret est associé à une mémoire contenant :
- au moins une matière ou au moins un groupe de matières ;
- un seuil maximal pour chaque état d'usage propre à chaque matière ou groupe de matières, à chaque paramètre ayant une incidence sur l'usure et à chaque critère de qualité ;
- au moins un état d'usage.

Selon une variante possible, un dispositif selon l'invention comprend des moyens d'enregistrement dans la mémoire associée audit foret, au cours de la réalisation en production de perçages au moyen dudit foret d'éléments à percer réalisés dans une même matière donnée ou un même groupe de matières donné, d'au moins un état d'usage comme étant le cumul dudit paramètre correspondant ayant une incidence sur l'usure dudit foret.

Selon l'invention, lesdits moyens de détermination d'au moins un état d'usage dudit foret réalisent une pondération en fonction de l'effet de l'abrasivité de la ou des matières percées sur l'usure du foret.

Dans le cadre de ladite pondération duquel :
- chaque état d'usage est assimilé à un écart par rapport à une valeur souhaitée dudit critère de qualité du perçage correspondant ;
- ledit écart varie en fonction du cumul dudit paramètre correspondant ayant une incidence sur l'usure dudit foret selon une fonction prédéterminée.

Selon une variante possible, un dispositif selon l'invention comprend des moyens de détermination d'au moins un état d'usage dudit foret en fonction de la profondeur de perçage à l'issue du perçage de chacune desdites couches de matières différentes dont est constitué un élément à percer, lesdits moyens de détermination d'au moins un état d'usage dudit foret à l'issue du perçage d'une couche comprenant pour chaque état d'usage :
- des moyens de prise en compte, au début du perçage d'une couche donnée,
   - de l'état d'usage calculé à l'issue du perçage de la couche précédente ;
   - d'une régression polynomiale prédéterminée de l'écart dudit critère de qualité auquel correspond l'état d'usage par rapport à une valeur souhaitée en fonction du cumul de la profondeur de perçage dudit foret, ladite régression polynomiale correspondant audit foret, à la matière de la couche donnée, ,
   - de la fonction inverse de ladite régression polynomiale,
- des moyens de calcul d'une première valeur, résultat de ladite fonction inverse appliquée audit état d'usage calculé à l'issue du perçage de la couche précédente ;
- des moyens de prise en compte de l'épaisseur percée dans ladite couche donnée,
- des moyens de calcul d'une deuxième valeur, somme de la première valeur et de ladite épaisseur percée dans ladite couche donnée,
- des moyens de calcul de l'état d'usage de fin de perçage de ladite couche donnée, résultant de ladite régression polynomiale appliquée à la deuxième valeur.

Selon une variante possible, un dispositif selon l'invention comprend moyens de détermination d'au moins un état d'usage dudit foret en fonction de l'entrée dudit foret dans un élément à percer à chaque perçage d'un élément à percer comprenant au moins une couche et d'au moins une matière, la matière d'un élément à percer avec laquelle le foret entre en premier lieu en contact au cours d'une étape de perçage constituant une matière d'attaque, lesdits moyens de détermination d'au moins un état d'usage dudit foret comprenant pour chaque état d'usage :
- des moyens de prise en compte, lors de la détection de l'entrée dudit foret dans un élément à percer donné,
   - de l'état d'usage calculé lors de la détection de l'entrée dudit foret dans l'élément à percer de l'étape de perçage précédente,
   - d'une régression polynomiale prédéterminée de l'écart dudit critère de qualité auquel correspond l'état d'usage par rapport à une valeur souhaitée en fonction du cumul de détection de l'entrée dudit foret dans un élément à percer correspondant audit foret, correspondant audit foret, à la matière d'attaque dudit élément à percer donné,
   - de la fonction inverse de ladite régression polynomiale,
- des moyens de calcul d'une première valeur, résultant de ladite fonction inverse appliquée audit état d'usage calculé à l'étape de perçage précédente,
- des moyens de calcul d'une deuxième valeur, somme de la première valeur et de la nouvelle entrée,
- des moyens de calcul de l'état d'usage de fin de perçage dudit élément à percer donné, résultant de ladite régression polynomiale appliquée à la deuxième valeur.

Selon une variante possible, un dispositif selon l'invention comprend une mémoire associée à chaque foret contenant :
- un seuil maximal d'au moins un état d'usage ;
- au moins une régression polynomiale :
   - pour une matière donnée ;
   - pour un critère de qualité donné ;
   - pour un paramètre ayant une incidence sur l'usure donné ;
- au moins un état d'usage.

Selon une variante possible, ledit au moins un critère de qualité d'un perçage appartient au groupe comprenant :
- les tolérances sur le diamètre du perçage ;
- l'état de surface des parois du perçage ;
- la perpendicularité de l'axe du perçage par rapport à la paroi à percer ;
- la cylindricité du perçage ;
- la localisation du perçage ;
- la taille de la bavure formée sur l'élément à percer à l'issue d'un perçage ;
- le délaminage en sortie d'un trou réalisé à travers de la fibre de carbone.

Un dispositif d'évaluation selon l'invention peut dans une variante être intégré à un dispositif de perçage, en particulier un dispositif de perçage à paramètres de coupe contrôlés.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- les figures 1a et 1b illustre des schémas d'un dispositif de perçage selon l'invention respectivement avec sa tête amovible solidarisée et désolidarisée du corps ;

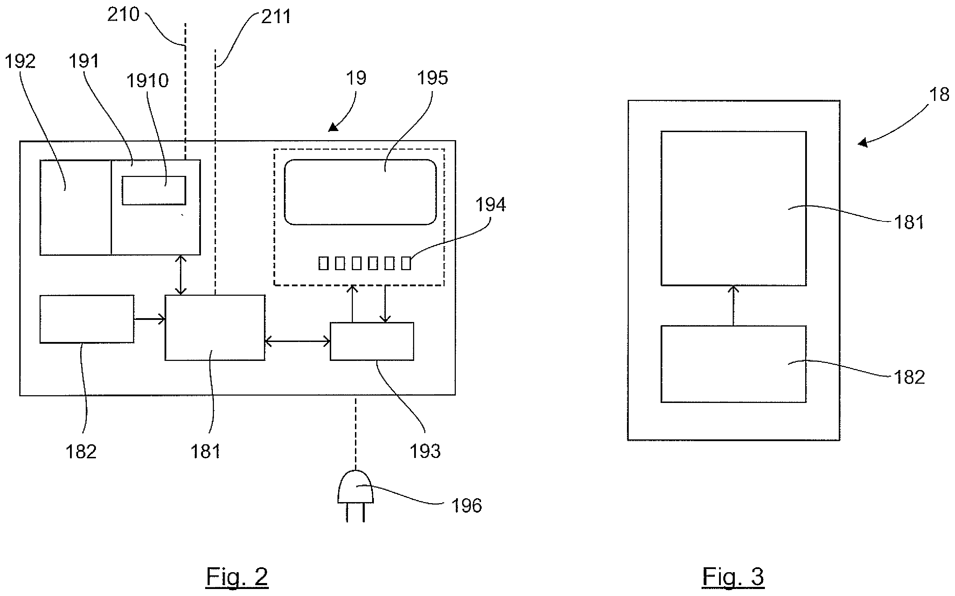

- la figure 2 illustre le schéma de moyens de commande du dispositif des figures 1a et 1b ;
- la figure 3 illustre le contrôleur du dispositif des figures 1a et 1b ;
- la figure 4a illustre l'extrémité d'un foret et la figure 4b illustre un foret étagé ;
- la figure 5 illustre l'intensité électrique consommée par le moteur d'entrainement en rotation d'un foret traversant des couches d'alliage d'aluminium et de titane ;
- les figures 6, 7 et 8 des exemples de courbes de régression polynomiales selon l'invention ;
- la figure 9 illustre une courbe de détermination de l'état d'usage d'un foret selon la méthode dynamique ;
- les figures 10a et 10b illustrent des logigrammes concernant la qualification d'un foret selon la méthode simplifiée ;
- les figures 11 et 12 illustrent des logigrammes concernant un procédé selon la méthode simplifiée ;
- les figures 13a et 13b illustrent des logigrammes concernant la qualification d'un foret selon la méthode dynamique ;
- les figures 14, 15 et 16 illustrent des logigrammes concernant un procédé selon la méthode dynamique de l'invention ;
- les figures 17 et 18 illustrent des exemples de tableaux de données recueillies à l'issue des évaluations en laboratoire de l'évolution de l'état d'usage de foret type suivant les méthodes simplifiée et dynamique.

### 6. Description de modes de réalisation particuliers

### 6.1. Dispositif

Un dispositif de perçage ou perceuse pour la mise en œuvre d'un procédé selon l'invention comprend une perceuse ou un robot de perçage à paramètres de coupe contrôlés. Un tel dispositif de perçage est connu en soit de l'homme du métier et n'est pas décrit en détail ici hormis les éléments plus spécifiques à l'invention.

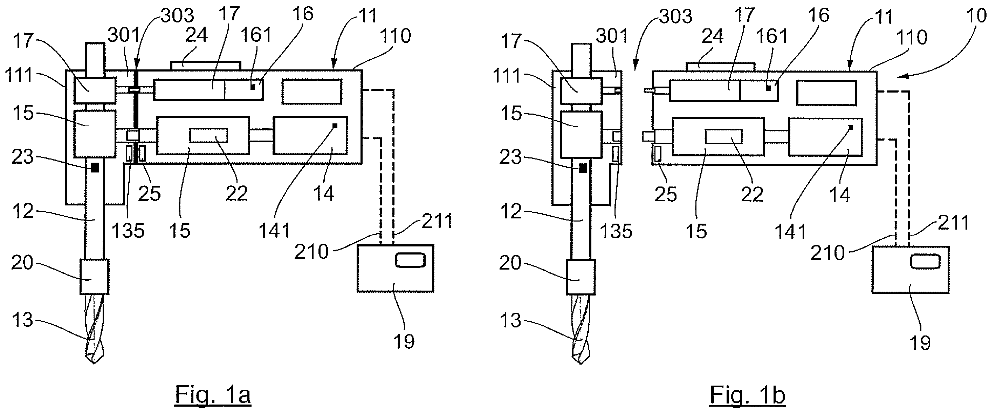

Ainsi que cela est représenté sur les figures 1a et 1b, un tel dispositif de perçage 10 comprend un carter 11.

Le carter 11 comprend une première portion de carter 110 et une deuxième portion de carter 111 qui s'étendent sensiblement perpendiculairement l'une à l'autre. Dans une variante, le carter pourrait s'étendre le long d'un unique axe et ainsi ne pas présenter une forme essentiellement en T.

La perceuse comprend un arbre de sortie 12 mobile en rotation et en translation selon un même axe. Cet arbre de sortie 12 est relié au moyen d'une ou plusieurs chaines de transmission à des moyens moteurs.

Dans ce mode de réalisation, les moyens moteurs comprennent :
- un moteur électrique d'entrainement en rotation 14 lié à l'arbre de sortie 12 par une chaine de transmission 15 permettant d'entrainer en rotation l'arbre de sortie 12, et donc le foret 13 qui y est solidarisé, et
- un moteur électrique d'avance 16, lié à l'arbre de sortie 12 par une chaine de transmission 17 permettant d'entrainer en translation l'arbre de sortie 12, et donc le foret qui y est solidarisé.

L'entrainement en rotation et l'entrainement en rotation se font selon un même axe. Un tel principe est notamment décrit dans le document FR3000693.

Le dispositif de perçage comprend une tête de perceuse amovible 301. Celle-ci correspond à la deuxième portion de carter 111 et comprend des moyens de solidarisation 20 d'un foret 13. Des moyens de liaison mécanique et électrique réversibles 303 seront classiquement mis en œuvre entre la tête de perceuse amovible 301 et la première portion de carter 110 (c'est-à-dire le corps de la perceuse).

Cette tête comprend une mémoire 135 comme par exemple une puce RFID au tout autre moyen de stockage de données approprié. La première portion de carter 110 comprendra donc un lecteur 25 apte à lire les informations contenues dans la mémoire associée à la tête de perceuse 301.

La charge sur le foret dans l'air d'un dispositif de perçage résulte essentiellement des frottements qui ont lieu à l'intérieur de la tête de perceuse amovible.

La tête comprend des moyens de solidarisation 20 d'un outil coupant 13, par exemple un foret, placés à l'extrémité de l'arbre de sortie 12. Ces moyens de solidarisation peuvent par exemple comprendre une pince de foret. Bien évidemment, ces moyens de solidarisation peuvent permettre de solidariser à la perceuse une pluralité de forets différents.

Durant la vie du foret les informations relatives au foret sont portées par la mémoire intégrée dans la tête.

Dans une variante, il pourrait être envisagée que la mémoire soit intégrée directement dans le foret.

Dans ces deux variantes, on dira que la mémoire est associée au foret qu'elle soit intégrée à son porte outil ou directement dans le foret.

Une alternative à une étiquette RFID pourrait être une mémoire électronique connectée au contrôleur de la perceuse par des connecteurs électriques.

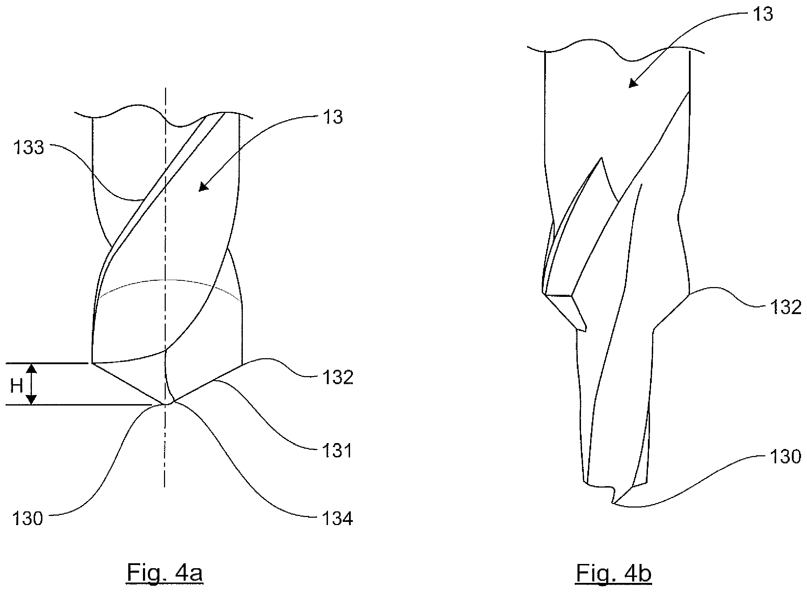

En référence à la figure 4a, la pointe d'un foret 13 comprend classiquement une arête centrale 130 prolongée latéralement par des arêtes principales 131 qui s'achèvent par des becs de coupe 132. Les becs de coupe 132 se prolongent par des listels 133 qui s'étendent de manière hélicoïdale et définissent le diamètre du foret. La surface qui s'étend entre l'arête centrale 130 et les becs de coupe 132, qui comprend la pointe d'extrémité 134 du foret, définit le cône du foret qui présente une hauteur H. Le foret peut aussi être un foret étagé avec différents groupes de becs (cf. figure 4b).

La perceuse est reliée par un câble à un contrôleur 19 qui comprend des moyens de commande 18 de la perceuse. Le câble comprend classiquement des fils d'alimentation de puissance 210 des moteurs et des fils de communication 211. Il pourra éventuellement également comprendre des tubes de passage de fluide(s) comme du lubrifiant.

Comme il sera expliqué plus en détail par la suite, ces moyens de commande 18 sont notamment configurés pour contrôler la perceuse afin de réaliser des opérations de perçage selon des stratégies de vissage préprogrammées et les différentes étapes d'un procédé selon l'invention. Une stratégie de perçage définit classiquement le déroulement d'un perçage.

Ces moyens de commande 18 comprennent dans ce mode de réalisation une unité centrale 181 associée à un programme d'exécution enregistré dans une mémoire 182. Le programme est codé de manière à permettre la mise en œuvre des étapes du procédé selon l'invention. Cette unité centrale peut comprendre un micro-processeur.

Ce contrôleur 19 comprend deux alimentations de puissance 191, 192 permettant d'alimenter le moteur d'entrainement en rotation 14 du foret et le moteur d'avance 16. Ces alimentations peuvent par exemple être des onduleurs convenant à l'alimentation de moteurs synchrones à aimants permanents. Ces moteurs sont munis d'un capteur d'angle 141, 161 dont le signal, représentatif de l'angle du rotor par rapport au stator, est utilisé par les onduleurs pour alimenter correctement les moteurs synchrones.

Ce contrôleur 19 intègre aussi une interface permettant la programmation de stratégies de perçage. Cette interface comprend une interface d'entrée sortie 193, une interface utilisateur pour gérer un moyen d'introduction de commande 194 (clavier, écran tactile, souris, ...), un moyen d'affichage 195 (écran, afficheur, voyant lumineux).

La perceuse peut par elle-même intégrer une interface homme machine 24 permettant le démarrage du perçage et la visualisation d'informations relatives au déroulement du perçage.

Le contrôleur 19 comprend un connecteur de raccordement 196 à une source d'alimentation en courant électrique. Le contrôleur est dissocié de la perceuse. Dans une variante, il pourrait y être intégré, c'est-à-dire être logé à l'intérieur du carter de la perceuse.

Le dispositif comprend des moyens de mesure d'au moins une information représentative de la charge sur le foret au cours d'un perçage.

Cette ou ces informations comprennent l'une ou la combinaison de plusieurs informations parmi le groupe suivant :
- couple appliqué sur le foret selon son axe de rotation ;
- force de poussée axiale appliquée sur ledit foret ;
- courant ou puissance électrique consommé par au moins un des moteurs dudit dispositif de perçage, ledit dispositif de perçage comprenant un moteur d'entrainement en rotation du foret et un moteur d'entrainement en translation dudit foret.

Les moyens de mesure d'au moins une information représentative de la charge sur le foret au cours d'un perçage comprennent donc l'un ou la combinaison de plusieurs des moyens suivants :
- un capteur de couple 22 appliqué au foret selon son axe de rotation ;
- un capteur de poussée 23 axiale apte à mesurer l'effort appliqué au foret le long de son axe de rotation ;
- un capteur de courant ou de puissance électrique 1910 consommée par au moins l'un des moteurs.

Ceux-ci sont connectés aux moyens de commande 18 pour en traiter les signaux.

Le dispositif de perçage comprend un dispositif ou des moyens d'évaluation de l'usure d'un foret tout au long de son utilisation pour effectuer le perçage d'éléments à percer constitués d'au moins une couche et d'au moins une matière, l'usure dudit foret traduisant sa capacité à réaliser un perçage respectant au moins un critère de qualité d'un perçage.

Ces moyens d'évaluation comprennent au moins :
- des moyens de mesure ou de détection d'au moins un paramètre ayant une incidence sur l'usure dudit foret, ledit paramètre étant choisi dans le groupe comprenant :
   - la profondeur de perçage percée par ledit foret ;
   - l'entrée dudit foret dans un élément à percer ;
- des moyens de détermination d'au moins un état d'usage dudit foret, chaque état d'usage étant déterminé en fonction d'un desdits paramètres et étant caractéristique d'un desdits critères de qualité d'un perçage.

Chaque état d'usage est associé à un seuil maximal prédéterminé, ledit seuil maximal de chacun desdits état d'usage étant inférieur ou égal à un état d'usage maximal prédéterminé au-delà duquel le critère de qualité dont est caractéristique ledit état d'usage n'est plus rempli.

Le dispositif selon l'invention comprend des moyens de qualification du foret en tant que « foret hors service » ou « foret serviable », qui permettent :
- de comparer chaque état d'usage d'un foret avec le seuil maximal d'état d'usage de chaque critère de qualité enregistré dans sa mémoire ;
- de qualifier le foret en tant que « foret hors service » dès que le seuil maximal d'un critère de qualité est atteint, et en tant que foret serviable tant qu'aucun seuil maximal n'est atteint.

Le dispositif comprend également des moyens permettant de communiquer une indication en ce sens de manière visuelle et/ou sonore (émission d'un message d'alerte, d'une alarme...).

Comme il sera décrit plus loin en relation avec le procédé selon l'invention, celui-ci est mis en œuvre selon une méthode dynamique qui sera ultérieurement décrite en détails.

Dans le cadre de la mise en œuvre d'une méthode simplifiée, qui ne fait pas partie de l'invention, le dispositif comprend des moyens de détermination, au cours de la réalisation en production de perçages au moyen dudit foret d'éléments à percer réalisés dans une même matière donnée ou un même groupe de matières donné, d'au moins un état d'usage du foret qui comprennent des moyens de calcul du cumul du paramètre ayant une incidence sur l'usure du foret pris en considération (cumul de la profondeur percée ou du nombre d'entrées du foret dans un élément à percer) depuis le début de la vie d'un foret. Le dispositif comprend également des moyens d'enregistrement dans la mémoire du foret de l'état d'usage à chaque opération de perçage. Ces moyens d'enregistrement comprennent en l'occurrence le lecteur qui permet également d'écrire dans la mémoire associée au foret.

Dans le cadre de la mise en œuvre de la méthode simplifiée, la mémoire associée à chaque foret pourra notamment contenir les informations suivantes :
- une ou plusieurs matières et/ou groupes de matières susceptibles d'être percés ;
- un seuil maximal pour chaque état d'usage propre à chaque matière ou groupe de matières, à chaque paramètre ayant une incidence sur l'usure et à chaque critère de qualité ;
- au moins un état d'usage.

Dans la mise en œuvre de la méthode dynamique, les moyens de détermination d'au moins un état d'usage réalisent une pondération en fonction de l'effet de l'abrasivité de la ou des matières percées sur l'usure du foret. Dans ce cas, la détermination du ou des états d'usage prend en considération le caractère abrasif des matières percées, lequel a un effet sur l'usure du foret.

Dans le cadre de cette pondération, et comme il ressortira plus clairement de la description à venir du procédé :
- chaque état d'usage est assimilé à un écart par rapport à une valeur souhaitée dudit critère de qualité du perçage correspondant ;
- ledit écart varie en fonction du cumul dudit paramètre correspondant ayant une incidence sur l'usure dudit foret selon une fonction prédéterminée.

Dans ce mode de réalisation, la fonction prédéterminée est une régression polynomiale de l'écart par rapport à une valeur souhaitée du critère de qualité considéré en fonction du cumul dudit paramètre correspondant ayant une incidence sur l'usure dudit foret selon une fonction prédéterminée.

Dans le cadre de la mise en œuvre de la méthode dynamique pour le perçage successif d'élément à percer constitués de couche de matières différentes et de la prise en considération de la profondeur de perçage en tant que paramètre ayant une incidence sur l'usure du foret, le dispositif comprend des moyens de détermination d'au moins un état d'usage du foret permettant, pour chaque état d'usage :
- de prendre en compte, au début du perçage d'une couche donnée,
   - l'état d'usage calculé à l'issue du perçage de la couche précédente ;
   - une régression polynomiale prédéterminée de l'écart dudit critère de qualité auquel correspond l'état d'usage par rapport à une valeur souhaitée en fonction du cumul de la profondeur de perçage dudit foret, ladite régression polynomiale correspondant audit foret, à la matière de la couche donnée,
   - la fonction inverse de ladite régression polynomiale,
- de calculer une première valeur, résultat de ladite fonction inverse appliquée audit état d'usage calculé à l'issue du perçage de la couche précédente ;
- de prendre en compte l'épaisseur percée dans ladite couche donnée,
- de calculer une deuxième valeur, somme de la première valeur et de ladite épaisseur percée dans ladite couche donnée,
- de calculer l'état d'usage de fin de perçage de ladite couche donnée, résultant de ladite régression polynomiale appliquée à la deuxième valeur : cet état d'usage est un écart par rapport à la valeur souhaitée du critère de qualité considéré.

Dans le cadre de la mise en œuvre de la méthode dynamique pour le perçage successif d'éléments à percer comprenant au moins une couche et au moins une matière, la matière d'un élément à percer avec laquelle le foret entre en premier lieu en contact au cours d'une étape de perçage constituant une matière d'attaque, et de la prise en considération de l'entrée du foret dans l'élément à percer en tant que paramètre ayant une incidence sur l'usure du foret, les moyens de détermination d'au moins un état d'usage du foret permettent, pour chaque état d'usage :
- de prendre en compte, lors de la détection de l'entrée dudit foret dans un élément à percer donné,
   - de l'état d'usage calculé lors de la détection de l'entrée dudit foret dans l'élément à percer de l'étape de perçage précédente,
   - d'une régression polynomiale prédéterminée de l'écart dudit critère de qualité auquel correspond l'état d'usage par rapport à une valeur souhaitée en fonction du cumul de détection de l'entrée dudit foret dans un élément à percer ladite régression polynomiale correspondant audit foret, à la matière d'attaque dudit élément à percer donné,
   - de la fonction inverse de ladite régression polynomiale,
- de calculer une première valeur, résultant de ladite fonction inverse appliquée audit état d'usage calculé à l'étape de perçage précédente,
- de calculer une deuxième valeur, somme de la première valeur et de la nouvelle entrée,
- de calculer l'état d'usage de fin de perçage dudit élément à percer donné, résultant de ladite régression polynomiale appliquée à la deuxième valeur.

Dans le cadre de la mise en œuvre de la méthode dynamique, la mémoire associée au foret pourra comprendre notamment :
- un ou plusieurs groupes de matières susceptibles d'être percés,
- un seuil maximal pour chaque état d'usage ;
- au moins une régression polynomiale :
   - pour une matière donnée ;
   - pour un critère de qualité donné ;
   - pour un paramètre ayant une incidence sur l'usure donné ;
- au moins un état d'usage.

Le dispositif comprend des moyens permettant de déterminer la profondeur de perçage et/ou des moyens permettant de déterminer l'entrée du foret dans l'élément à percer, ces informations étant nécessaire à la détermination des états d'usage Ces moyens sont à présent décrits.

### Détection en temps réel des passages du foret de l'air à l'élément à percer ou inversement, ou d'une matière à un autre

Au cours d'un perçage, le foret se déplace dans l'air au cours d'une phase d'approche jusqu'à ce qu'il rencontre l'élément à percer. Cet air est appelé air d'approche. Le foret rencontre alors successivement les différentes matières dont est constitué l'élément à percer jusqu'à ce qu'il sorte de l'élément à percer. Il se déplace alors dans l'air appelé air de sortie.

Le dispositif de perçage comprend des moyens permettant lors du perçage d'une pièce constituée de plusieurs couches de matières différentes :
- de détecter en temps réel un changement de matière, c'est-à-dire des passages du foret de l'air d'approche à l'élément à percer ou de l'élément à percer à l'air de sortie ou d'une matière à un autre de l'élément à percer;
- d'identifier la matière rencontrée par le foret, l'air étant assimilé à une matière.

Ces moyens ne constituent pas en soit l'objet de la présente invention. Ils vont être décrits par la suite et sont appelés moyens de détection de changement de matière et de détermination matière.

Des moyens de détection de changement de matière rencontrée par le foret ont été décrits par le passé dans le cadre du développement de perceuses à paramètres de coupe contrôlés, par exemple dans le document de brevet EP 0339659.

Le développement de tels moyens a été rendu nécessaire pour le perçage de pièces formées de plusieurs couches de matières différentes telles que des alliages d'aluminium, de titane ou de fibre de carbone. Ces matières différentes requièrent des paramètres de coupe différents, il était donc nécessaire de détecter le changement de matière au cours d'un même perçage pour permettre l'adaptation des paramètres de coupe de la perceuse en fonction de la matière rencontrée. Ces moyens mettent en œuvre la mesure en temps réel, lors d'un perçage, des valeurs de charge sur le foret à l'aide des moyens de mesure d'au moins une information représentative de la charge sur le foret décrits précédemment.

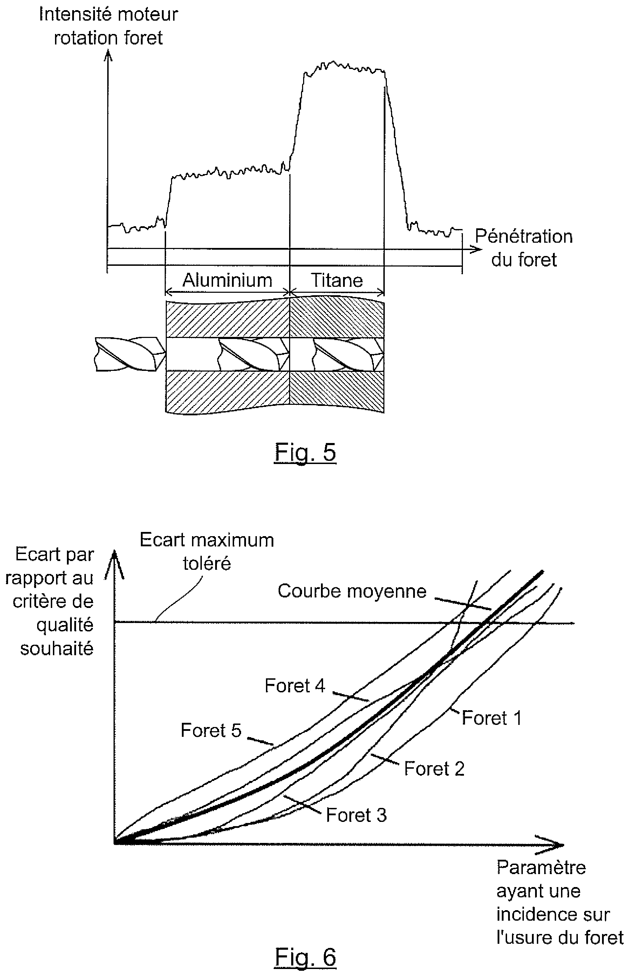

La surveillance de la charge sur le foret permet de détecter de brutales augmentation ou diminution de sa valeur, provoquées par une dureté ou résilience différente d'une matière percée à la suivante. Ainsi, la figure 5 illustre l'intensité électrique consommée par le moteur d'entrainement en rotation d'un foret traversant des couches d'alliage d'aluminium et de titane.

Ces valeurs de charge sont dépendantes des paramètres de coupe utilisés au moment de la mesure, en particulier de la vitesse de coupe et de la vitesse d'avance. Ces paramètres de coupe sont ceux adaptés à la matière précédant la matière nouvellement rencontrée.

Ceci conduit à ce que l'amplitude des valeurs de charge sur le foret ayant rencontré une nouvelle matière est dépendante de la matière précédente et ne permet pas en soit de déterminer le type de la nouvelle matière. Ceci implique donc dans les techniques de détection de changement de matière selon l'art antérieur de déclarer préalablement au perçage les matières que le foret sera amené à rencontrer et leur ordre d'empilement.

Les moyens de détection de changement de matière et de détermination de matière susceptibles d'être utilisés dans le cadre de la présente invention n'obligent pas à déclarer ni les matières que le foret sera amené à rencontrer ni leur ordre d'empilement. Ceci procure une plus grande adaptabilité du dispositif de perçage vis-à-vis de structure à percer dont l'ordre des matières et l'épaisseur des différentes couches de matières ne seraient pas connus de l'opérateur au préalable.

Ces moyens de détection de changement de matière et de détermination matière permettent:
- de mesurer en temps réel au moins une information représentative de la charge sur le foret ;
- de détecter l'augmentation ou la diminution de la valeur de l'au moins une information représentative de la charge sur le foret mesurée et donc d'en déduire le passage du foret d'une matière à une autre (passage de l'air d'approche à une matière de l'élément à percer ou d'une matière de l'élément à percer à l'air de sortie ou d'une matière à un autre de l'élément à percer), la détection d'une augmentation ou d'une diminution de l'au-moins une information représentative de la charge sur le foret correspondant au passage du foret d'une matière à une autre ;
- d'appliquer au foret, chaque fois que le passage d'une matière à une autre est détecté, des paramètres de coupe de référence prédéterminés : ces paramètres de coupe de référence sont les mêmes à chaque détection du passage du foret d'une matière à une autre, et sont maintenus pendant une durée suffisante pour permettre le passage complet des becs du foret dans la nouvelle matière ;
- de déduire de l'au moins une information représentative de la charge sur le foret mesurée, alors que la paramètres de coupe de référence prédéterminés sont appliqués, la matière rencontrée, chaque matière percée par un foret donné avec des paramètres de référence donnés engendrant des valeurs de charge d'un niveau donné. Pour cela, la valeur mesurée de l'au moins une information représentative de la charge sur le foret est comparée avec une pluralité d'informations prédéterminées représentatives d'une charge de référence correspondant chacune au type de foret utilisé et à une matière différente. La matière en cours de perçage identifiée est alors celle dont l'information représentative de la charge de référence correspond à la valeur mesurée de l'au moins une information représentative de la charge sur le foret, ou le cas échéant celle dont l'intervalle de tolérance de la charge de référence contient la valeur mesurée de l'au moins une information représentative de la charge sur le foret.

Les valeurs des paramètres de coupe de référence sont choisies en fonction d'une part du groupe de matières prédéterminé que le foret est susceptible de percer et d'autre part de façon à ne pas engendrer de défaut de perçage ou d'usure prématurée du foret durant la phase d'application des paramètres de référence quel que soit la matière rencontrée faisant partie du groupe.

Un type de foret est notamment caractérisé par sa forme, sa matière, son revêtement, son diamètre...

La mémoire associée au foret contiendra les données nécessaires à la mise en œuvre de ces moyens de détection de changement matière et de détermination matière, entre autre :
- des paramètres de coupe de référence prédéterminés pour chaque matière ou pour chaque groupe de matières données ;
- un intervalle de valeurs de charge pour chaque matière susceptible de contenir les valeurs de charge que le perçage de la matière considérée engendre sur le foret lors de l'application des paramètres de coupe de référence.

Toutefois, ces moyens de détection de changement matière et de détermination matière pourront être remplacés par tout autre moyen permettant de reconnaître les matières ou airs rencontrés par le foret en action de perçage et supposant par exemple la déclaration dans la stratégie de perçage des matières rencontrées par le foret au cours du perçage et de leur ordre d'empilement.

### Mesure des profondeurs de matières percées par le foret

Le dispositif de perçage comprend des moyens de mesure de la profondeur de perçage du foret pour chaque matière ou groupe de matières percés. Cette mesure est réalisée entre deux instants correspondants à la détection de l'entrée du foret dans la matière ou le groupe de matières considéré et à la sortie du foret de la matière ou du groupe de matières considéré. Ces instants seront déterminés par exemple par les moyens de détection de changement de matière et détermination matière précédemment décrits.

Des moyens de mesure de la profondeur de perçage pourront, par exemple, comprendre un capteur d'angle du moteur d'avance du dispositif de perçage. Il peut par exemple s'agir d'un moteur d'avance synchrone sans balais (moteur brushless). Ce capteur fournit via son électronique de traitement de signal, l'angle de rotation du moteur.

Ces moyens de mesure de la profondeur de perçage permettent :
- de mesurer l'angle de rotation du moteur d'avance entre deux instants donnés :
   - soit entre l'entrée et la sortie du foret dans une couche de matière donnée faisant partie éventuellement d'un groupe de matières d'une pièce à percer. Dans ce cas, le dispositif comprendra des moyens de détection d'un changement de matière qui ont été décrits précédemment.
   - soit entre l'entrée et la sortie d'un groupe de matière d'une pièce à percer ;
- de transformer l'angle de rotation du moteur mesuré entre les deux instants précédents en une profondeur de perçage en utilisant le ratio de transmission de la chaine cinématique entre le moteur d'avance et le foret, qui définit le rapport entre le nombre de tours du moteur d'avance et la course d'avance du foret.

Dans une variante, les moyens de mesure de la profondeur de perçage comprennent un capteur de vitesse placé sur la chaine cinématique entre le moteur d'avance et le foret. Dans ce cas, ils permettent :
- d'intégrer le signal de vitesse fournit par le capteur de vitesse en fonction du temps entre les deux instants donnés pour obtenir l'angle de rotation de l'élément de la chaîne cinématique supportant le capteur :
   - soit entre l'entrée et la sortie du foret dans une couche de matière donnée faisant partie éventuellement d'un groupe de matières d'une pièce à percer. Dans ce cas, le dispositif comprendra des moyens de détection d'un changement de matière qui ont été décrits précédemment.
   - soit entre l'entrée et la sortie d'un groupe de matière d'une pièce à percer ;
- de déduire de cet angle le déplacement du foret en utilisant le ratio de transmission définissant le rapport entre le nombre de tours du moteur d'avance et la distance d'avance du foret.

Tant dans le cadre de la méthode simplifiée que dans celui de la méthode dynamique, la matière ou le groupe de matières de l'élément à percer pourra être sélectionnée manuellement au moyen de l'interface utilisateur.

### 6.2. Procédé

### 6.2.1. Méthode simplifiée : sans pondération de l'état d'usage par l'effet abrasif propre à chaque matière.

La méthode simplifiée est applicable pour le perçage de trou dans des pièces constituées d'une seule matière ou constituées d'un empilement de couches de différentes matières présentant une proportion régulière entre les épaisseurs de ces différentes matières d'un perçage au suivant.

Le respect de cette contrainte permet l'établissement en laboratoire d'un seuil maximal d'état d'usage du foret sous la forme simplifiée d'un cumul de profondeur percée ou de nombre d'entrées du foret dans une pièce à percer.

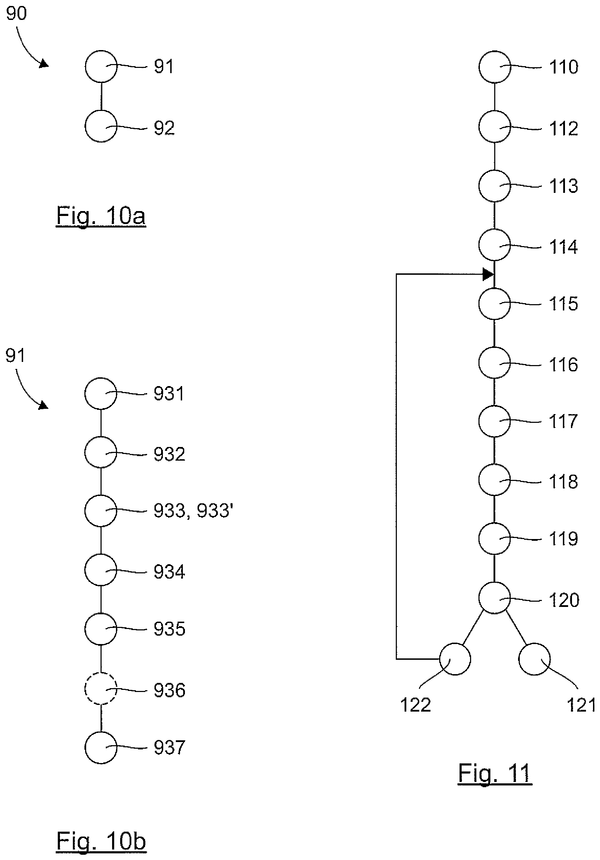

Elle comprend notamment, en référence à la figure 10a, une étape 90 évaluation en laboratoire comprenant une étape 91 de détermination de seuils maximal d'état d'usage, et une étape 92 d'enregistrement dans la mémoire associée à chaque foret des paramètres de régulation qui lui sont propres.

### i. Détermination du seuil maximal d'état d'usage en laboratoire

L'étape 91 de détermination a pour objectif de déterminer un seuil maximal d'état d'usage au-delà duquel un foret d'un type donné perçant une matière ou un groupe de matière donné ne permet plus de réaliser des trous satisfait à au moins critère de qualité.

Pour déterminer ce seuil maximal, un test en laboratoire est mis en œuvre. Un tel test comprend une succession d'étapes qui diffèrent selon que le critère pris en considération est la profondeur de perçage percée par le foret ou le nombre d'entrées du foret dans un élément à percer.

### i.1 Profondeur de perçage percée

L'étape de détermination 91 pour chaque type de forets d'un seuil maximal d'état d'usage pour chaque critère de qualité, lorsque la profondeur de perçage percée par un foret est considérée comme paramètre ayant une incidence sur l'usure d'un foret, va à présent être décrite en référence à la figure 10b.

Celle-ci consiste, pour chaque type de forets, et pour chaque matière et chaque groupe de matières, à réaliser au moins une série de perçages dans des éprouvettes réalisées en ladite matière ou en ledit groupe de matières avec un foret neuf du type considéré à chacune desdites séries (étape 931). Ces perçages sont réalisés avec les paramètres de coupe adaptés à la matière ou au groupe de matière. Ils comprennent l'un ou la combinaison de plusieurs paramètres parmi les suivants :
- vitesse de coupe ;
- vitesse d'avance ;
- fréquence de rotation ;
- type et niveau de lubrification ;
- aspiration des copeaux;
- amplitude et fréquence de la composante de perçage vibratoire.

Le respect d'au moins un critère de qualité sera vérifié au cours de chacun de ces perçages.

Ledit au moins un critère de qualité d'un perçage appartient au groupe comprenant :
- les tolérances sur le diamètre du perçage ;
- l'état de surface des parois du perçage ;
- la perpendicularité de l'axe du perçage par rapport à la paroi à percer ;
- la cylindricité du perçage ;
- la localisation du perçage ;
- la taille de la bavure formée sur l'élément à percer à l'issue d'un perçage ;
- le délaminage en sortie d'un trou réalisé à travers de la fibre de carbone.

Chacun des critères de qualité possède, pour un perçage donné, une valeur nominale et un intervalle de tolérances prédéterminé en fonction de la qualité que doit présenter le trou percé.

La vérification du respect de chacun des critères de qualité correspond donc à vérifier si la valeur observée du critère pendant chaque série de perçage se situe ou non à l'intérieur de l'intervalle de tolérances correspondant (étape 932).

Au cours de chaque série de perçage, un état d'usage est calculé pour ledit ou chacun desdits critères de qualité (étape 933). Dans ce mode de réalisation, il correspond au calcul du cumul de la profondeur percée depuis le début de la série.

Les perçages de ladite au moins une série sont poursuivis jusqu'à ce que ledit au moins un critère de qualité ne soit plus rempli, c'est-à-dire jusqu'à sa valeur nominale ne se situe plus dans l'intervalle de tolérances correspondant (étape 934).

A chaque série un état d'usage est enregistré pour ledit ou chacun desdits critères de qualité comme limite d'état d'usage admissible lorsque le critère de qualité correspondant n'est plus rempli (étape 935) : ainsi, pour chaque série de perçage, on obtient une profondeur de perçage limite admissible pour chaque critère de qualité au-delà de laquelle ce critère de qualité n'est plus rempli.

Lorsque plusieurs séries de perçages sont réalisées, on calcul pour ledit ou chacun desdits état d'usage la moyenne des limites d'état d'usage admissible enregistrées au cours des séries correspondants à l'état d'usage considéré (étape 936).

On détermine alors un seuil maximal d'un état d'usage pour ledit ou chacun desdits critères de qualité, ledit seuil maximal étant égal ou inférieur à ladite limite ou moyenne de limites d'état d'usage admissible correspondant au critère de qualité considéré (étape 937).

A l'issue de cette évaluation, on obtient pour chaque type de forets, un seuil maximal d'état d'usage, en l'occurrence une profondeur de perçage maximale, pour chaque matière et/ou groupe de matières et pour chaque critère de qualité.

Ainsi, pour un foret d'un type donné, on obtiendra pour chaque critère de qualité une profondeur de perçage maximale comme seuil maximal d'état d'usage pour telle et telle matière et/ou pour tel et tel groupe de matières.

Par exemples :
- pour le perçage d'éléments en titane avec un type de foret donné, la profondeur maximale de perçage admissible au-delà de laquelle le diamètre du perçage n'est plus convenable sera de W mètres ;
- pour le perçage d'éléments comprenant des couches successives de titanes, aluminium et fibre de carbone avec un type de foret donné, la profondeur maximale de perçage admissible au-delà de laquelle la conicité du perçage n'est plus convenable sera de X mètres.

### i.2 Entrée du foret dans un élément à percer

L'évaluation des types de forets, lorsque l'entrée du foret dans un élément à percer est considérée comme paramètre ayant une incidence sur l'usure d'un foret, va à présent être décrite en référence à la figure 10b.

Celle-ci est identique à celle qui vient d'être décrite lorsque le paramètre pris en considération est la profondeur de perçage à ceci près que plutôt que de mesurer le cumul de profondeur percée au cours de chaque série jusqu'à ce que chacun des critères de qualité ne soit plus rempli, on mesure ici le cumul d'entrées du foret dans une éprouvette (étape 933'), c'est-à-dire le nombre total d'entrée du foret dans un élément à percer depuis le début de la série.

A l'issue de cette évaluation, on obtient alors pour chaque type de forets, un seuil maximal d'état d'usage, en l'occurrence un nombre maximal d'entrée du foret dans un élément à percer, pour chaque matière et/ou groupe de matières et pour chaque critère de qualité.

Chaque groupe de matière comprend une matière d'attaque, c'est-à-dire la matière qui est percée en premier par le foret. Ainsi, dans le cas des groupes de matières, le nombre maximal d'entrées matière pour un groupe donné sera lié à sa matière d'attaque.

Ainsi, pour un foret d'un type donné, on obtiendra pour chaque critère de qualité un nombre maximal d'entrée dans un élément à percer comme seuil maximal d'état d'usage pour telle et telle matière et/ou pour tel et tel groupe de matières.

Par exemples :
- pour le perçage d'éléments en titane ou dont la première couche est en titane avec un type de foret donné, le nombre maximal admissible d'entrées du foret dans un élément à percer au-delà duquel le diamètre du perçage n'est plus convenable sera de Y entrées ;
- pour le perçage d'éléments en aluminium ou dont la première couche est en aluminium avec un type de foret donné, le nombre maximal admissible d'entrées du foret dans un élément à percer au-delà duquel la conicité du perçage n'est plus convenable sera de Z entrées.

### i.3 Enregistrement

L'évaluation comprend également une étape d'enregistrement 92 dans la mémoire 135 associée à chacun des forets 13 :
- d'une ou plusieurs matière et/ou groupes de matières ;
- d'un seuil maximal d'état d'usage (profondeur de perçage maximale ou nombre maximal d'entrées dans un élément à percer) pour chaque critère de qualité et pour chaque matière et/ou groupe de matières et pour le ou les paramètres ayant une incidence sur l'usure du foret pris en considération.

L'enregistrement de ces informations dans la mémoire associée au foret sera réalisé par le service en charge des outillages et pourra faire l'objet d'une préparation en prévision de futures applications.

A l'issu de l'évaluation préalable en laboratoire de différents types de forets, on obtient ainsi une banque de types de forets chacun associé à des paramètres de perçage propres pour chaque matière ou groupe de matières susceptibles d'être percés. En fonction de la nature du perçage (par exemple de son diamètre, des matières à percer,...) un foret du type adapté à ce perçage sera choisi, les paramètres de perçage correspondant pouvant être puisés dans la mémoire associé au foret.

### i.4 Données issues de l'évaluation

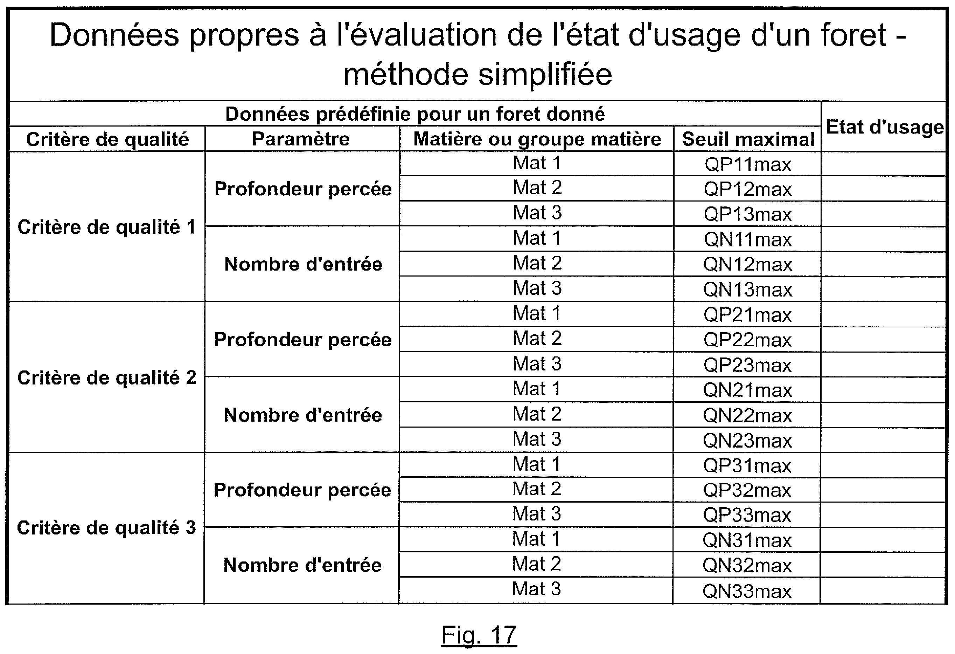

A l'issue de l'évaluation en laboratoire, on peut par exemple obtenir par type d'outil donné (foret) , un tableau tel que celui de la figure 17 mentionnant un seuil maximal d'état d'usage pour chaque critère de qualité, chaque paramètre pris en considération (profondeur de perçage ou nombre d'entrées dans l'élément à percer, et chaque matière ou groupe de matières.

### ii. Application du procédé en production

### ii.1 Prise en compte de la profondeur de perçage

En référence à la figure 11, afin de réaliser des opérations successives de perçage d'éléments à percer réalisés dans une même matière donnée ou dans un même groupe de matières donné, le foret adéquat est choisi dans la banque de forets disponibles et solidarisé à l'extrémité de l'arbre de sortie du dispositif de perçage (étape 110).

Chaque opération de perçage est ensuite réalisée selon la stratégie préprogrammée dans le contrôleur 19 sélectionnée (étape 112), la matière ou le groupe de matière des éléments à percer étant sélectionné (étape 113).

Le contrôleur 19 lit, au moyen du lecteur d'étiquette RFID 25, le contenu de la mémoire 135 associée au foret 13 de façon à recueillir les données relative à la matière ou au groupe de matière à percer (étape 114). Le foret est ensuite emmené en rotation et en translation en direction de l'élément à percer puis l'opération de perçage se poursuit par le perçage de l'élément (étape 116) jusqu'à ce que le foret sorte de l'élément à percer (étape 117).

### Détermination de la profondeur percée par le foret

Au cours de chaque opération de perçage, la profondeur percée par le foret est mesurée grâce aux moyens de mesure de profondeur de perçage. Pour cela, le procédé comprend :
- une étape 115 de détection de l'entrée du foret dans l'élément à percer, c'est-à-dire une étape de détection du passage du foret de l'air d'approche à l'élément à percer ;
- une étape 117 de détection de la sortie du foret de l'élément à percer, c'est-à-dire une étape de détection du passage du foret de l'élément à percer à l'air de sortie ;
- une étape 118 de mesure de la distance de déplacement des becs de coupe du foret entre l'entrée du foret dans l'élément à percer et la sortie du foret de l'élément à percer.

La détermination de la profondeur percée au cours d'une opération de perçage peut être réalisée de différentes façons en utilisant des capteurs d'angle ou de vitesse placés sur la chaîne cinématique entre le moteur d'avance et le foret.

### Cumul de la profondeur percée par le foret

A chaque nouvelle opération de perçage, la profondeur percée par le foret est ajoutée à celle le cas échéant déjà enregistrée dans sa mémoire lors d'opérations de perçage précédentes (étape 119). La mémoire du foret contient ainsi la profondeur total de perçage depuis le début de son utilisation.

### Détermination état d'usage

La profondeur totale percée par le foret constitue un état d'usage du foret. Celui-ci est comparé avec les seuils de profondeur maximale admissible de chaque critère de qualité enregistré dans le foret pour la matière ou le groupe de matières dont sont constitués les éléments à percer successivement percés (étape 120).

Dès que le seuil maximal d'un critère de qualité est atteint, le foret est qualifié « foret hors service » et une indication (visuelle, sonore ou autre) en ce sens est notifiée afin que le foret soit remplacé et des trous de qualité soient percés (étape 121).

Dans le cas contraire, le foret est qualifié « foret serviable » (étape 122). De nouveaux cycles de perçage peuvent alors être réalisés avec ce foret jusqu'à ce qu'il soit qualifié « foret hors service ».

### ii.2. Prise en compte de l'entrée du foret dans un élément à percer

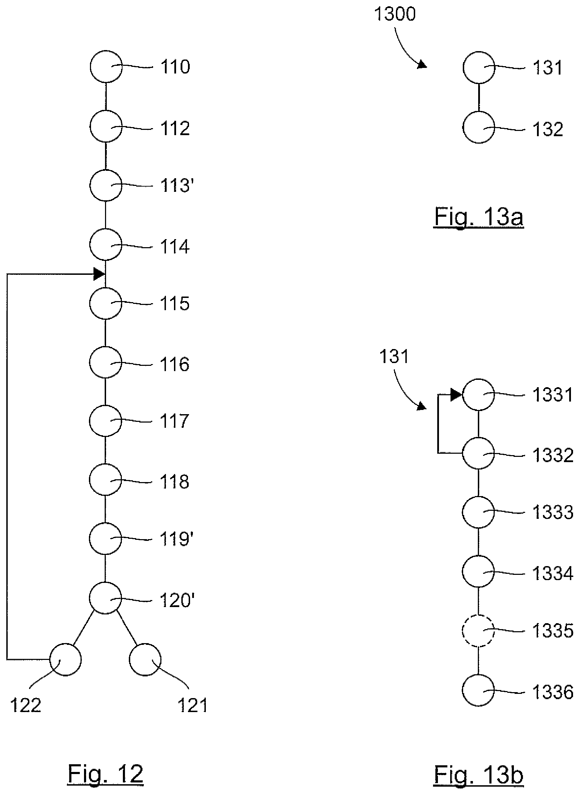

Lorsque le paramètre pris en compte pour déterminer l'état d'usage du foret est non plus la profondeur percée mais l'entrée du foret dans l'élément à percer, le procédé est identique à celui qui vient d'être décrit en relation avec ce dernier paramètre hormis en ce qui concerne les éléments suivants (en référence à la figure 12).

Comme dans la variante précédente, la matière percée est sélectionnée au début de chaque opération de perçage d'éléments faits d'une unique matière. Dans le cas d'éléments faits d'un empilement de matières donné, la matière de la première couche, appelée matière d'attaque, est également sélectionnée au début de chaque opération de perçage (étape 113').

### Détermination entrée dans un élément à percer

Dans ce cas, plutôt que de comprendre une étape de mesure de la profondeur percée à chaque opération de perçage, le procédé comprend, à chaque opération de perçage, une étape 115 de détection de l'entrée du foret dans l'élément à percer. Cette étape est identique à celle mise en œuvre dans la variante précédente lors de la détermination de la profondeur percée.

### Cumul des entrées du foret dans un élément à percer

A chaque nouvelle opération de perçage, l'entrée du foret dans un élément à percer est ajoutée à celles le cas échéant déjà enregistrées dans sa mémoire lors d'opérations de perçage précédentes (étape '119'). La mémoire du foret contient ainsi le nombre total d'entrée dans un élément à percer depuis le début de son utilisation.

### Détermination état d'usage

Le nombre total d'entrée du foret dans un élément à percer constitue un état d'usage du foret. Celui-ci est comparé avec les seuils de nombre d'entrées maximale de chaque critère de qualité enregistré dans le foret pour la matière dont sont constitués les éléments à percer ou la première couche du groupe de matières dont sont constitués les éléments à percer successivement percés (étape 120').

Dès que le seuil maximal d'un critère de qualité est atteint, le foret est qualifié « foret hors service » et une indication en ce sens est notifiée afin que le foret soit remplacé et des trous de qualité soient percés (étape 121).

Dans le cas contraire, le foret est qualifié « foret serviable » (étape 122). De nouveaux cycles de perçage peuvent alors être réalisés avec ce foret jusqu'à ce qu'il soit qualifié « foret hors service ».

L'état d'usage est mis à jour par le contrôleur, à l'issue de chaque perçage dans un tableau du type de celui fig.17.

### 6.2.2. Méthode dynamique : avec pondération en fonction des matières percées

La méthode dynamique, contrairement à la méthode simplifiée, permet de pondérer la détermination de l'état d'usure d'un foret en fonction de l'abrasivité des matières percées par celui-ci, elle permet donc d'enchainer des perçages dont la proportion entre les épaisseurs des couches des différentes matières présente une grande variabilité d'un perçage au suivant.

### i. Evaluation préalable des effets abrasifs propre à chaque matière en laboratoire

Un procédé selon l'invention comprend une étape d'évaluation préalable visant à évaluer l'effet abrasif de différentes matières sur un foret et par conséquent sur sa capacité à réaliser des trous respectant différents critères de qualité. Cette étape est réalisée dans des conditions de laboratoires, c'est-à-dire hors production. Il s'agit en quelque sorte d'un paramétrage préalable à l'utilisation.

L'évaluation préalable en laboratoire porte sur le couple formé par un type foret et une tête amovible. Les têtes amovibles peuvent appartenir à différents types.

Un type de foret est notamment caractérisé par sa forme, sa matière, son revêtement, son diamètre...

Un type de perceuse est notamment caractérisé par sa transmission, sa motorisation, ses dimensions...

En référence à la figure 13a, cette étape 1300 d'évaluation préalable en laboratoire comprenant notamment :
- une étape 131 de détermination de courbes de régression et de seuils maximal d'états d'usage, et
- une étape 132 d'enregistrement dans la mémoire associée à chaque foret des paramètres de régulation qui lui sont propres.

### i.1. Courbe de régression et Seuil maximal d'état d'usage

Cette évaluation a comme objectif d'établir, pour une matière donnée et un foret donné utilisé avec des paramètres de coupe adéquates, une relation entre le cumul de la profondeur percée ou le nombre d'entrée et l'écart par rapport à un critère de qualité donné. Cette relation prendra la forme d'une fonction mathématique.

Les critères de qualité d'un perçage pouvant être pris en considération appartiennent au groupe comprenant :
- les tolérances sur le diamètre du perçage ;
- l'état de surface des parois du perçage ;
- la perpendicularité de l'axe du perçage par rapport à la paroi à percer ;
- la cylindricité du perçage ;
- la localisation du perçage ;
- la taille de la bavure formée sur l'élément à percer à l'issue d'un perçage ;
- le délaminage en sortie d'un trou réalisé à travers de la fibre de carbone.

Chacun des critères de qualité possède, pour un perçage donné, une valeur nominale et un intervalle de tolérances prédéterminé en fonction de la qualité que doit présenter le trou percé. Chacun des critères de qualité possède une valeur souhaitée prédéterminée en fonction de la qualité que doit présenter le trou percé. Cette valeur se situe préférentiellement à l'intérieur de cet intervalle de tolérances.

L'étape 131 de détermination de courbes de régression et de seuils maximal d'état d'usage comprend, en référence à la figure 13b, pour chaque type de forets, et pour chaque matière, la réalisation d'au moins une série de perçages dans des éprouvettes réalisées en ladite matière avec un foret neuf du type considéré à chacune desdites séries (étape 1331).

Après chacun des perçages de ladite au moins une série, l'écart entre la valeur dudit ou de chacun desdits critères de qualité retenus par rapport à ladite valeur souhaitée correspondant au critère considéré est mesuré (étape 1332).

A titre d'exemple, dans le cadre du respect d'une tolérance de diamètre, l'écart peut être la différence entre le diamètre réalisé et le milieu de la tolérance. Idéalement cet écart doit être nul lorsque le foret est neuf et il peut augmenter au fur et à mesure que le foret s'use jusqu'à atteindre une valeur au-delà de laquelle le foret n'est plus dans la tolérance requise.

L'écart entre la valeur du critère de qualité considéré par rapport à ladite valeur souhaitée en fonction du cumul du paramètre ayant une incidence sur l'usure dudit foret est enregistré pour ledit ou chacun desdits critères de qualité (étape 1333).

Les perçages de ladite au moins une série sont poursuivis jusqu'à ce que ledit au moins un critère de qualité ne soit plus rempli (étape 1334), c'est-à-dire jusqu'à ce que sa valeur ne se situe plus à l'intérieur de l'intervalle de tolérances correspondant.

Lorsque plusieurs séries de perçages sont réalisées, un calcul est réalisé pour ledit ou chacun desdits critères de qualité de la moyenne desdits écarts en fonction du cumul du paramètre ayant une incidence sur l'usure dudit foret (étape 1335).

Un calcul est réalisé pour ledit ou chacun desdits critères de qualité d'une régression polynomiale dudit écart ou de la moyenne desdits écarts en fonction du cumul du paramètre ayant une incidence sur l'usure dudit foret (étape 1336).

On obtient alors, pour chaque type de foret, pour chaque matière et pour chaque critère de qualité, une courbe de régression polynomiale de l'écart ou de la moyenne des écarts entre la valeur du critère de qualité considéré et ladite valeur souhaitée correspondant en fonction du cumul du paramètre ayant une incidence sur l'usure dudit foret, i.e. la profondeur percée ou le nombre d'entrée du foret dans un élément à percer. C'est la prise en compte de ces régressions qui permet de pondérer l'état d'usure d'un foret en fonction de l'abrasivité des matières percées.

Une telle courbe est visible à la figure 6. Cette figure illustre, pour chaque foret, en l'occurrence cinq dans l'exemple représenté, d'un même type de foret utilisé au cours de séries de perçages, l'enregistrement sous la forme d'une courbe de régression de la variation en fonction du paramètre ayant une incidence sur l'usure du foret pris en compte lors de l'essai considéré (profondeur de perçage ou nombre d'entrées dans un élément à percer) de l'écart par rapport au critère de qualité du perçage pris en compte lors de l'essai considéré (écart par rapport au diamètre souhaité, par rapport à la conicité souhaitée...). La courbe de régression moyenne obtenue à partir de l'ensemble des courbes est également représentée sur la figure 6.

Un seuil maximal (écart maximum toléré) est fixé pour l'écart entre la valeur observée de chaque critère de qualité au cours d'un perçage et ladite valeur souhaitée correspondant (écart maximum toléré). Ce seuil est choisi de manière telle qu'au-delà de lui le critère de qualité n'est plus rempli.

On obtient ainsi, pour chaque type de foret, une courbe de régression illustrant la variation d'un paramètres ayant une incidence sur l'usure du foret en fonction d'un écart par rapport à la valeur souhaitée d'un critère de qualité, et ce pour chaque matière et pour chaque paramètre ayant une incidence sur l'usure du foret pris en considération et pour chaque critères de qualité pris en considération.

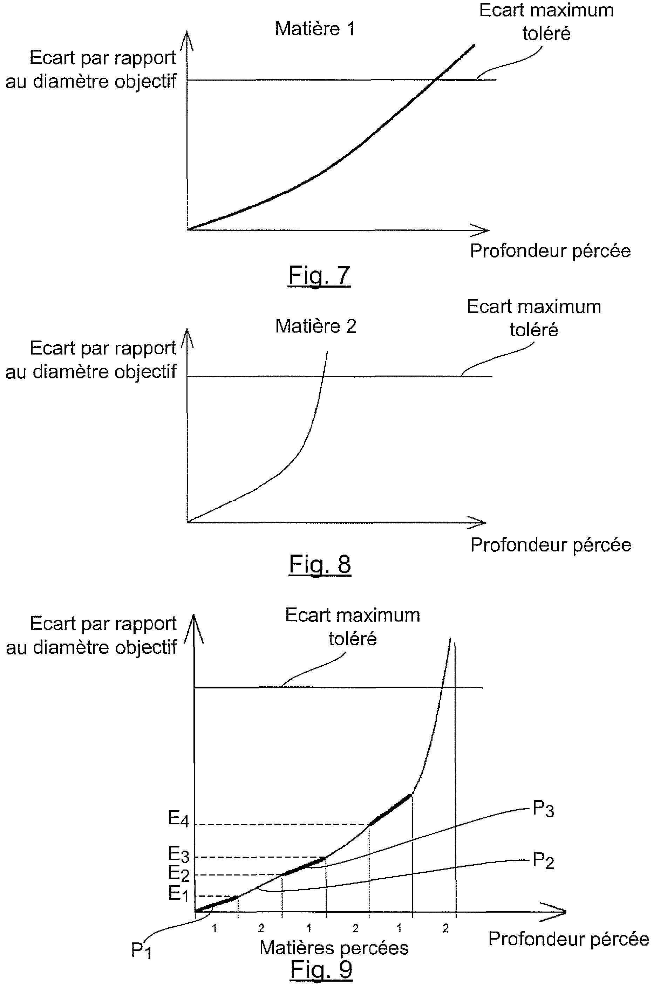

La figure 7 illustre par exemple la variation de l'écart par rapport au diamètre souhaité en fonction de la profondeur percée d'une matière 1 donnée au moyen d'un foret d'un type donné.
La figure 8 illustre par exemple la variation de l'écart par rapport au diamètre souhaité en fonction de la profondeur percée d'une matière 2 donnée au moyen d'un foret d'un type donné.

### i.2. Enregistrement

L'évaluation 1300 comprend également une étape d'enregistrement 132 dans la mémoire 135 associée à chacun des forets 13 :
- d'un ou de plusieurs groupes de matières ;
- d'une fonction de régression polynomiale de l'écart ou de la moyenne des écarts entre la valeur du critère de qualité considéré et ladite valeur souhaitée pour chaque matière, pour le ou les paramètres ayant une incidence sur l'usure pris en considération, et pour chaque critère de qualité ;
- de la fonction inverse de chaque fonction de régression polynomiale ;
- d'un seuil maximal admissible pour chaque critère de qualité, pour chaque groupe de matière et pour le ou les paramètres ayant une incidence sur l'usure pris en considération.

L'enregistrement de ces informations dans la mémoire associée au foret sera réalisé par le service en charge des outillages et pourra faire l'objet d'une préparation en prévision de futures applications.

A l'issu de l'évaluation préalable en laboratoire de différents types de forets, on obtient ainsi une banque de données utilisable pour l'évaluation de l'état d'usage de chaque type de foret en situation de production.

### i.3. Données issues de l'évaluation préalable

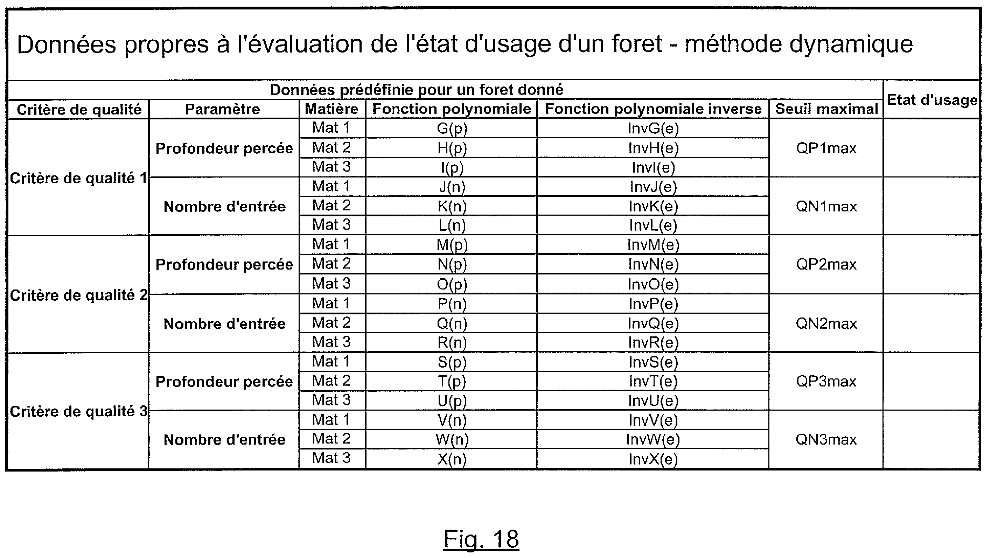

A l'issue de l'évaluation préalable, on peut par exemple obtenir par type d'outil donné(foret), un tableau tel que celui de la figure 18 mentionnant pour chaque critère de qualité, pour chaque paramètre pris en considération (profondeur de perçage ou nombre d'entrées dans l'élément à percer), et pour chaque matière une fonction de régression polynomiale et sa fonction inverse, ainsi que un seuil maximal.

### ii. Application du procédé en production

### ii.1. Prise en compte de la profondeur de perçage

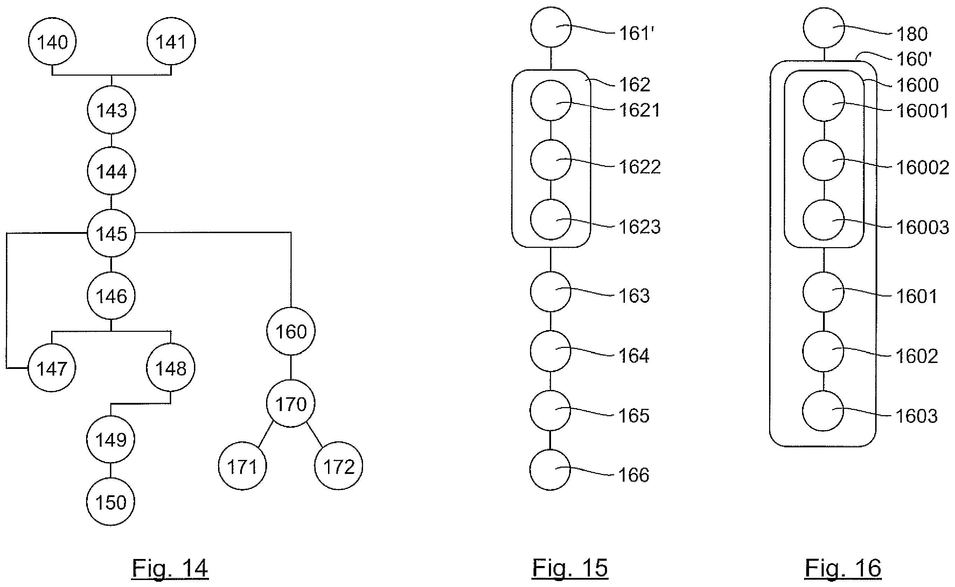

En référence à la figure 14, afin de réaliser une opération de perçage d'un élément comprenant un empilement d'une succession de couches de matières différentes formant un groupe de matières, le foret adéquate muni de sa tête amovible sera choisi dans la banque de forets disponibles et solidarisé sur le dispositif de perçage (étape 140 de choix du foret). Le choix de la stratégie de perçage adéquate est également réalisé (étape 141 de choix d'une stratégie de perçage). La stratégie de perçage retenue peut induire, lorsque plusieurs groupes de matières sont enregistrés dans la mémoire du foret, la sélection du groupe correspondant.

Le contrôleur 19 lit alors, au moyen du lecteur d'étiquette RFID 25, le contenu de la mémoire 135 associée au foret 13 (étape 143 de lecture de la mémoire associée au foret).

L'opération de perçage est ensuite démarrée (étape 144) selon la stratégie préprogrammée dans le contrôleur 19 incluant l'approche du foret vers l'élément à percer, le perçage de celui-ci, la sortie du foret de l'élément à percer et la rétractation du foret. Une stratégie de perçage est définie par type de perçage réalisé avec un foret donné dans une pièce constituée de plusieurs couches de matières données. Elle définit les paramètres de coupe pour chacune des phases du perçage, approche du foret vers la pièce à percer, perçage de chacune des couches de matière, sortie et rétraction du foret.

Les moyens de détection de changement matière et de détermination matière sont mis en œuvre dès le début de l'opération de perçage.

Au cours de la progression du foret vers la pièce à percer puis au travers de la pièce à percer, les moyens de détection de changement matière et de détermination matière mettent en œuvre une étape de détection de l'entrée du foret dans la pièce à percer ou de détection du passage du foret d'une couche de matière à la suivante (étape 145).

Une entrée dans la pièce à percer est différenciée d'un changement de matière par le fait qu'elle consiste en le passage de l'air d'approche à une matière solide et un changement de matière par le passage d'une matière solide à une autre.

Chaque étape 145 de détection d'une entrée dans la pièce à percer ou d'un changement de matière (passage du foret d'une matière à une autre) est suivie d'une étape 146 de détermination de la matière rencontrée. L'identification de l'air de sortie en tant que matière rencontrée constitue une étape de détection de la sortie du foret de la pièce à percer.

Chaque fois qu'une nouvelle matière est identifiée (étape 146), le contrôleur du dispositif de perçage applique au foret les paramètres de coupe adaptés à cette matière pour procéder au perçage de celle-ci (étape 147).

Après que le foret ait traversé la pièce à percer, ce qui se traduit par la détection de l'air de sortie en tant que matière rencontrée par le foret (étape 148), le contrôleur provoque la rétractation du foret (étape de rétractation 149).

Une fois que la rétractation complète du foret est achevée, les moteurs sont arrêtés et un compte rendu de perçage est enregistré par le contrôleur et éventuellement exporté vers un réseau informatique visant à assurer la traçabilité de la production (étape 150).

Chaque fois qu'un changement de matière est détecté (étape 145), ce qui correspond à la fin du perçage de la couche de matière qui vient d'être percée, une étape de détermination d'au moins un état d'usage dudit foret en fonction de la profondeur de perçage est mise en œuvre (étape 160).

Pour cela, en référence à la figure 15, la profondeur de perçage percée à travers la couche de matière qui vient d'être percée est déterminée (étape 161'). Ce calcul est effectué comme cela a été décrit plus haut en relation avec la méthode simplifiée en tenant non plus en compte l'instant d'entrée du foret dans l'élément à percer et l'instant de sortie du foret dans l'air mains l'instant d'entrée du foret dans la couche considérée et l'instant de sortie du foret de cette couche.

L'étape de détermination d'au moins un état d'usage dudit foret à l'issue du perçage d'une couche comprend pour chaque état d'usage les étapes suivantes :
- prise en compte, au début du perçage de la couche de matière qui vient d'être percée (étape 162),
   - de l'état d'usage calculé à l'issue du perçage de la couche précédente (si la couche qui vient d'être percée est la première, cet état d'usage est nulle) (étape 1621) ;
   - de la régression polynomiale correspondant audit foret, à la matière de la couche qui vient d'être percée, et au critère de qualité auquel correspond l'état d'usage en fonction de la profondeur percée (étape 1622),
   - de la fonction inverse de ladite régression polynomiale (étape 1623),
- calcul d'une première valeur, résultat de ladite fonction inverse appliquée audit état d'usage calculé à l'issue du perçage de la couche précédente (étape 163) ;
- prise en compte de l'épaisseur percée dans ladite couche qui vient d'être percée (étape 164),
- calcul d'une deuxième valeur, somme de la première valeur et de ladite épaisseur percée dans ladite couche qui vient d'être percée (étape 165),
- calcul de l'état d'usage de fin de perçage de ladite couche donnée, résultant de ladite régression polynomiale appliquée à la deuxième valeur (étape 166) : cet état d'usage est un écart par rapport à la valeur souhaitée du critère de qualité considéré.

Ce principe est représenté par la courbe illustrée à la figure 9 pour un exemple selon lequel on perce successivement des éléments à percer comprenant l'empilement de deux matières différentes appelées matière 1 et matière 2 en prenant en considération la profondeur percée en tant que paramètre ayant une incidence sur la profondeur de perçage et le diamètre souhaité en tant que critère de qualité du perçage.

La première matière percée est la matière 1. A l'issue du perçage de cette couche de matière 1, on détermine la profondeur percée. A partir de cette profondeur percée et de la courbe de la figure 7, on détermine l'état d'usage E1 correspondant, c'est-à-dire l'écart par rapport au diamètre objectif et celui-ci est enregistré dans la mémoire du foret. On obtient ainsi la première portion P1 de la courbe de la figure 9. On entame ensuite le perçage de la couche de matière 2 suivante. A l'issue de celui-ci, on détermine la profondeur percée dans celle-ci. Puis, à partir de la valeur l'état d'usage E1 précédemment calculé à l'issue du perçage de la couche précédente de matière 1, on applique la fonction inverse de la courbe illustrée à la figure 8 afin de déterminer la profondeur de perçage correspondante. On ajoute à la valeur de celle-ci la valeur de la profondeur de perçage réalisé à travers la couche de matière 2. Puis, à partir de la valeur de la somme de profondeur ainsi obtenue, on détermine à partir de la courbe de la figure 8 l'état d'usage correspondant E2 et celui-ci est enregistré dans la mémoire du foret. On obtient ainsi la deuxième portion P2 de la courbe de la figure 9. On entame ensuite le perçage d'une nouvelle couche de matière 1. A l'issue de celui-ci, on détermine la profondeur percée dans celle-ci. Puis, à partir de la valeur de l'état d'usage E2 précédemment calculé à l'issue du perçage de la couche précédente de matière 2, on applique la fonction inverse de la courbe illustrée à la figure 7 afin de déterminer la profondeur de perçage correspondante. On ajoute à la valeur de celle-ci la valeur de la profondeur de perçage réalisé à travers la couche de matière 1. Puis, à partir de la valeur de la somme de profondeur ainsi obtenue, on détermine à partir de la courbe de la figure 7 l'état d'usage E3 correspondant et celui-ci est enregistré dans la mémoire du foret. Les perçages sont ainsi poursuivis jusqu'à ce que le seuil maximal d'état d'usage, en d'autre terme l'écart maximum toléré par rapport au critère de qualité pris en considération soit atteint.

Chaque fois qu'une nouvelle couche de matière est percée, on détermine ainsi pour chaque critère de qualité un état d'usage.

Lorsque le paramètre ayant une incidence sur l'usure du foret est la profondeur de perçage, alors l'état d'usage pour chaque critère sera un écart par rapport à la valeur souhaitée de ce critère déterminé en prenant en considération les courbes polynomiales des matières percées exprimant la variation d'un tel écart en fonction de la profondeur percée.

Chaque état d'usage est comparé au seuil maximal admissible correspondant (étape 170).

Dès qu'un état d'usage atteint son seuil maximal admissible, alors le foret est qualifié « foret hors service » et cette information est notifiée (étape 171).

Tant qu'aucun état d'usage n'atteint son seuil maximal admissible, le foret est qualifié « foret serviable » et cette information est notifiée (étape 173).

### ii.2. Prise en compte du nombre d'entrées du foret dans un élément à percer

Lorsque le paramètre ayant une incidence sur l'usure du foret pris en compte est non plus la profondeur de perçage mais le nombre d'entrées du foret dans un élément à percer, le fonctionnement du procédé est identique hormis en ce qui concerne ce qui suit, excepté que le calcul d'état d'usage n'est effectué qu'une fois par perçage d'un élément à percer, ceci après l'identification à l'étape 145 de l'entrée dans la pièce à percer.

Les courbes polynomiales considérées sont celles exprimant la variation des écarts des critères de qualité par rapport aux valeurs souhaitées en fonction du nombre d'entrées du foret dans un élément à percer, ainsi que les seuils maximum correspondants.

Le procédé comprend des étapes successives de perçage d'éléments à percer comprenant au moins une couche et au moins une matière, la matière d'un élément à percer avec laquelle le foret entre en premier lieu en contact au cours d'une étape de perçage constituant une matière d'attaque.

En référence à la figure 16, le procédé comprend, à chaque opération de perçage, une étape (180) de détermination de la matière d'attaque de l'élément percé. Cette étape fonctionne selon le même principe que l'étape de détermination de la matière décrite dans le cadre de la précédente variante.

Le procédé comprend au cours de chaque étape de perçage d'un élément à percer une étape 160' de détermination d'au moins un état d'usage dudit foret en fonction de l'entrée dudit foret dans un élément à percer, l'étape de détermination d'au moins un état d'usage dudit foret comprenant pour chaque état d'usage les étapes suivantes :
- prise en compte, lors de la détection de l'entrée dudit foret dans un élément à percer donné (étape 1600),
   - de l'état d'usage calculé lors de la détection de l'entrée dudit foret dans l'élément à percer de l'étape de perçage précédente (si l'élément percé est le premier que le foret perce, l'état d'usage est nul) (étape 16001),
   - de la régression polynomiale correspondant audit foret, à la matière d'attaque dudit élément à percer donné, et au critère de qualité auquel correspond ledit état d'usage en fonction de la détection de l'entrée dudit foret dans un élément à percer (étape 16002),
   - de la fonction inverse de ladite régression polynomiale (étape 16003),
- calcul d'une première valeur, résultant de ladite fonction inverse appliquée audit état d'usage calculé à l'étape de perçage précédente (étape 1601),
- calcul d'une deuxième valeur, somme de la première valeur et de la nouvelle entrée (étape 1602),
- calcul de l'état d'usage de fin de perçage dudit élément à percer donné, résultant de ladite régression polynomiale appliquée à la deuxième valeur (étape 1603).

Chaque fois qu'une nouvelle couche de matière est percée, on détermine ainsi pour chaque critère de qualité un état d'usage.

L'état d'usage est mis à jour par le contrôleur, à l'issue de chaque perçage dans un tableau du type de celui figure 18.

### 6.3. Variantes

Dans des variantes des méthodes simplifiée et dynamique :
- seul un critère de qualité ou bien une pluralité de critères de qualité pourront être pris en considération pour la qualification d'un foret ;
- seul un paramètre ayant une incidence sur l'usure du foret ou bien les deux pourront être pris en considération pour la détermination d'états d'usage.

Dans le cadre de la méthode dynamique, la matière ou le groupe de matières des éléments successivement percés pourra être renseigné dans la stratégie de perçage plutôt que détecté automatiquement. Dans le cas d'un groupe de matière, l'ordre d'empilement des couches sera alors également renseigné. Dans le cas de la prise en compte du nombre d'entrées dans un élément à percer, la matière d'attaque du groupe de matières dont sont constituées les éléments successivement percés pourra également être sélectionnée manuellement plutôt que détectée automatiquement.

Dans une autre variante, la détection du changement de matière utilisera la dérivée en fonction du temps de la valeur de ladite au moins une information de présentative de la charge sur le foret. Dans ce cas, le procédé comprendra une étape de calcul de la dérivée en fonction du temps de la valeur mesurée de la charge sur le foret qui sera comparée avec un seuil prédéterminé, l'atteinte de ce seuil correspondant à un changement de matière. Ce seuil sera prédéterminé expérimentalement pour chaque matière et pour chaque type de foret en la perçant avec un foret et en déterminant une valeur moyenne de dérivée par rapport au temps de ladite au moins une information de présentative de la charge sur le foret qui sera enregistrée comme seuil.

Pour certain critères de qualité, l'écart entre la valeur du critère de qualité et sa valeur souhaitée en fonction de la profondeur de perçage cumulée ou du nombre cumulé d'entrée en matière peut évoluer de manière subite au bout d'une certaine profondeur de perçage ou d'un certain nombre d'entrée en matière. Pour d'autres critères de qualité, cet écart peut au contraire évoluer de manière progressive. Dans le premier cas, la méthode simplifiée, non couverte par la présente invention, sera préférentiellement mise en œuvre alors que dans le second cas la méthode dynamique selon le principe de l'invention sera préférentiellement mise en œuvre. Une méthode hybride, non couverte par la présente invention, entre les méthodes simplifiée et dynamique sera envisageable. Elle pourra consister à calculer en temps réel un état d'usage comme étant le cumul de la profondeur percée d'une matière durant le perçage d'une pièce constituée de plusieurs matières différentes.

Ainsi, dans des variantes, certains critères pourront être déterminés, au cours de la mise en œuvre d'un même procédé, selon la méthode dynamique et d'autre selon la méthode simplifiée. Un exemple de solution technique a été décrit plus haut pour déterminer le moment auquel le foret entre dans l'élément à percer, le moment auquel il en ressort, ainsi que pour détecter le passage du foret d'une couche à une autre d'un matériau et pour identifier ce matériau. Ces techniques sont décrite à titres illustrative et pourraient être remplacées par des solutions différentes connues de l'homme du métier. De telles techniques peuvent être basées sur la mesure des évolutions de la charge sur le foret qui permet de détecter des changements de matière.

## Revendications

1. Procédé d'évaluation de l'usure d'un foret (13) tout au long de son utilisation pour effectuer le perçage d'éléments à percer constitués d'au moins une couche et d'au moins une matière, l'usure dudit foret (13) traduisant sa capacité à réaliser un perçage respectant au moins un critère de qualité d'un perçage, ledit procédé comprenant au moins :
- une étape (115) de mesure ou de détection d'au moins un paramètre ayant une incidence sur l'usure dudit foret (13), ledit paramètre étant
- la profondeur de perçage percée par ledit foret (13) ; ou
- l'entrée dudit foret (13) dans un élément à percer ;
- une étape de détermination (160) d'au moins un état d'usage dudit foret (13), chaque état d'usage étant déterminé en fonction d'un desdits paramètres et étant caractéristique d'un desdits critères de qualité d'un perçage ;
**caractérisé par** la détermination (160) d'au moins un état d'usage dudit foret (13) comprenant une pondération en fonction de l'effet de l'abrasivité de la ou des matières percées sur l'usure du foret (13), dans le cadre de cette pondération :
- chaque état d'usage étant assimilé à un écart par rapport à une valeur souhaitée dudit critère de qualité du perçage correspondant ;
- ledit écart variant en fonction du cumul dudit paramètre correspondant ayant une incidence sur l'usure dudit foret (13) selon une fonction prédéterminée.

2. Procédé selon la revendication 1, dans lequel chaque état d'usage est associé à un seuil maximal prédéterminé, ledit seuil maximal de chacun desdits état d'usage étant inférieur ou égal à un état d'usage maximal prédéterminé au-delà duquel le critère de qualité dont est caractéristique ledit état d'usage n'est plus rempli.

3. Procédé selon la revendications 2, dans lequel chaque état d'usage est associé à un seuil maximal prédéterminé, ladite étape de détermination (160) d'au moins un état d'usage dudit foret (13) comprenant, au cours de la réalisation en production de perçages d'un élément à percer au moyen dudit foret (13), la qualification dudit foret (13) en tant que :
- « foret serviable » tant que ledit seuil maximal dudit au moins un état d'usage dudit foret n'est pas atteint ;
- « foret hors service » à partir du moment où le seuil maximal d'au moins état d'usage dudit foret (13) est atteint.

4. Procédé selon la revendication 3, comprenant une étape (121) d'émission d'un message indiquant que le foret (13) est hors service dès que la qualification « hors service » est attribuée au foret.

5. Procédé selon l'une quelconque des revendications 1 à 4, comprenant une étape (1300) d'évaluation préalable en laboratoire d'au moins un type de forets (13) pour au moins une matière, ladite étape (1300) d'évaluation comprenant pour chaque type de forets (13) et pour chaque matière :
- la réalisation (1331) d'au moins une série de perçages dans des éprouvettes réalisées en ladite matière avec un foret neuf du type considéré à chacune desdites séries ;
- la mesure (1332), après chacun des perçages de ladite au moins une série, de l'écart entre la valeur dudit ou de chacun desdits critères de qualité par rapport à ladite valeur souhaitée correspondant au critère considéré ;
- l'enregistrement (1333), pour ledit ou chacun desdits critères de qualité, de l'écart entre la valeur du critère de qualité considéré par rapport à ladite valeur souhaitée en fonction du cumul du paramètre ayant une incidence sur l'usure dudit foret (13) correspondant au critère de qualité considéré ;
- la poursuite (1334) des perçages de ladite au moins une série jusqu'à ce que ledit au moins un critère de qualité ne soit plus rempli ;
- lorsque plusieurs séries de perçages sont réalisées, le calcul (1335) pour ledit ou chacun desdits critères de qualité de la moyenne desdits écarts en fonction du cumul du paramètre ayant une incidence sur l'usure dudit foret (13) correspondants au critère de qualité considéré ;
- le calcul (1336) pour ledit ou chacun desdits critères de qualité d'une régression polynomiale dudit écart ou de la moyenne desdits écarts en fonction du cumul du paramètre ayant une incidence sur l'usure dudit foret (13) correspondants au critère de qualité considéré, ladite régression polynomiale constituant ladite fonction prédéterminée utilisée dans ladite pondération.

6. Procédé selon la revendication 5, une mémoire étant associée à chaque foret (13), ladite étape d'évaluation (1300) comprenant une étape d'enregistrement (135) dans la mémoire associée à chaque foret :
- du seuil maximal pour au moins un état d'usage propre à un critère de qualité et à un paramètre ayant une incidence sur l'usure ;
- d'au moins une régression polynomiale :
- pour une matière donnée ;
- pour un critère de qualité donné ;
- pour un paramètre ayant une incidence sur l'usure donné.

7. Procédé selon la revendication 5 ou 6 comprenant, au cours du perçage d'un élément constitué d'un empilement de couches de matières différentes, une étape (160) de détermination d'au moins un état d'usage dudit foret (13) en fonction de la profondeur de perçage à l'issue du perçage de chacune desdites couches, l'étape (160) de détermination d'au moins un état d'usage dudit foret (13) à l'issue du perçage d'une couche comprenant pour chaque état d'usage les étapes suivantes :
- prise en compte, au début du perçage (162) d'une couche donnée,
- de l'état d'usage calculé à l'issue du perçage de la couche précédente (1621) ;
- de la régression polynomiale correspondant audit foret (13), à la matière de la couche donnée, et au critère de qualité auquel correspond l'état d'usage en fonction de la profondeur percée (1622),
- de la fonction inverse de ladite régression polynomiale (1623),
- calcul (163) d'une première valeur, résultat de ladite fonction inverse appliquée audit état d'usage calculé à l'issue du perçage de la couche précédente ;
- prise en compte (164) de l'épaisseur percée dans ladite couche donnée,
- calcul (165) d'une deuxième valeur, somme de la première valeur et de ladite épaisseur percée dans ladite couche donnée,
- calcul (166) de l'état d'usage de fin de perçage de ladite couche donnée, résultant de ladite régression polynomiale appliquée à la deuxième valeur.

8. Procédé selon la revendication 5 ou 6 comprenant des étapes successives de perçage d'éléments à percer comprenant au moins une couche et au moins une matière, la matière d'un élément à percer avec laquelle le foret (13) entre en premier lieu en contact au cours d'une étape de perçage constituant une matière d'attaque, ledit procédé comprenant au cours de chaque étape de perçage d'un élément à percer une étape (160') de détermination d'au moins un état d'usage dudit foret (13) en fonction de l'entrée dudit foret (13) dans un élément à percer, l'étape de détermination (160') d'au moins un état d'usage dudit foret (13) comprenant pour chaque état d'usage les étapes suivantes :
- prise en compte, lors de la détection (1600) de l'entrée dudit foret (13) dans un élément à percer donné,
- de l'état d'usage calculé lors de la détection de l'entrée dudit foret (13) dans l'élément à percer de l'étape de perçage précédente (16001),
- de la régression polynomiale correspondant audit foret (13), à la matière d'attaque dudit élément à percer donné, et au critère de qualité auquel correspond ledit état d'usage en fonction de la détection de l'entrée dudit foret (13) dans un élément à percer (16002),
- de la fonction inverse de ladite régression polynomiale (16003),
- calcul d'une première valeur, résultant de ladite fonction inverse appliquée audit état d'usage calculé à l'étape de perçage précédente (1601),
- calcul (1602) d'une deuxième valeur, somme de la première valeur et de la nouvelle entrée,
- calcul (1603) de l'état d'usage de fin de perçage dudit élément à percer donné, résultant de ladite régression polynomiale appliquée à la deuxième valeur.

9. Procédé selon la revendication 7 ou 8, comprenant en outre une étape d'enregistrement dans la mémoire associée à chaque foret (13) au cours de son utilisation pour percer des éléments à percer d'au moins un état d'usage.

10. Procédé selon l'une quelconque des revendications 1 à 9 dans lequel ledit au moins un critère de qualité d'un perçage appartient au groupe comprenant :
- les tolérances sur le diamètre du perçage ;
- l'état de surface des parois du perçage ;
- la perpendicularité de l'axe du perçage par rapport à la paroi à percer;
- la cylindricité du perçage ;
- la localisation du perçage ;
- la taille de la bavure formée sur l'élément à percer à l'issue d'un perçage ;
- le délaminage en sortie d'un trou réalisé à travers de la fibre de carbone.

11. Dispositif d'évaluation de l'usure d'un foret (13) tout au long de son utilisation pour effectuer le perçage d'éléments à percer constitués d'au moins une couche et d'au moins une matière, l'usure dudit foret (13) traduisant sa capacité à réaliser un perçage respectant au moins un critère de qualité d'un perçage, ledit dispositif comprenant au moins :
- des moyens de mesure ou de détection d'au moins un paramètre ayant une incidence sur l'usure dudit foret, ledit paramètre étant
- la profondeur de perçage percée par ledit foret (13) ; ou
- l'entrée dudit foret (13) dans un élément à percer ;
- des moyens de détermination d'au moins un état d'usage dudit foret, chaque état d'usage étant déterminé en fonction d'un desdits paramètres et étant caractéristique d'un desdits critères de qualité d'un perçage.
**caractérisé par** lesdits moyens de détermination d'au moins un état d'usage dudit foret réalisant une pondération en fonction de l'effet de l'abrasivité de la ou des matières percées sur l'usure du foret, dans le cadre de cette pondération :
- chaque état d'usage étant assimilé à un écart par rapport à une valeur souhaitée dudit critère de qualité du perçage correspondant ;
- ledit écart variant en fonction du cumul dudit paramètre correspondant ayant une incidence sur l'usure dudit foret selon une fonction prédéterminée.

12. Dispositif selon la revendication 11, dans lequel chaque état d'usage est associé à un seuil maximal prédéterminé, ledit seuil maximal de chacun desdits états d'usage étant inférieur ou égal à un état d'usage maximal prédéterminé au-delà duquel le critère de qualité dont est caractéristique ledit état d'usage n'est plus rempli.

13. Dispositif selon la revendications 12, comprenant des moyens de qualification dudit foret en tant que :
- « foret serviable » tant que ledit seuil maximal dudit au moins un état d'usage dudit foret n'est pas atteint ;
- « foret hors service » à partir du moment où le seuil maximal d'au moins état d'usage dudit foret est atteint.

14. Dispositif selon la revendication 13, comprenant des moyens d'émission d'un message indiquant que le foret est hors service dès que la qualification « hors service » est attribuée au foret.

15. Dispositif selon l'une quelconque des revendications 11 à 14, dans lequel chaque foret est associé à une mémoire contenant :
- au moins une matière ou au moins un groupe de matières ;
- un seuil maximal pour chaque état d'usage propre à chaque matière ou groupe de matières, à chaque paramètre ayant une incidence sur l'usure et à chaque critère de qualité ;
- au moins un état d'usage.

16. Dispositif selon la revendication 15, comprenant des moyens d'enregistrement dans la mémoire associée audit foret, au cours de la réalisation en production de perçages au moyen dudit foret d'éléments à percer réalisés dans une même matière donnée ou un même groupe de matières donné, d'au moins un état d'usage comme étant le cumul dudit paramètre correspondant ayant une incidence sur l'usure dudit foret.

17. Dispositif selon l'une quelconque des revendications 11 à 16 comprenant des moyens de détermination d'au moins un état d'usage dudit foret en fonction de la profondeur de perçage à l'issue du perçage de chacune desdites couches de matières différentes dont est constitué un élément à percer, lesdits moyens de détermination d'au moins un état d'usage dudit foret à l'issue du perçage d'une couche comprenant pour chaque état d'usage :
- des moyens de prise en compte, au début du perçage d'une couche donnée,
- de l'état d'usage calculé à l'issue du perçage de la couche précédente ;
- d'une régression polynomiale prédéterminée de l'écart dudit critère de qualité auquel correspond l'état d'usage par rapport à une valeur souhaitée en fonction du cumul de la profondeur de perçage dudit foret, ladite régression polynomiale correspondant audit foret, à la matière de la couche donnée, ,
- de la fonction inverse de ladite régression polynomiale,
- des moyens de calcul d'une première valeur, résultant de ladite fonction inverse appliquée audit état d'usage calculé à l'issue du perçage de la couche précédente ;
- des moyens de prise en compte de l'épaisseur percée dans ladite couche donnée,
- des moyens de calcul d'une deuxième valeur, somme de la première valeur et de ladite épaisseur percée dans ladite couche donnée,
- des moyens de calcul de l'état d'usage de fin de perçage de ladite couche donnée, résultant de ladite régression polynomiale appliquée à la deuxième valeur.

18. Dispositif selon la revendication 17 comprenant des moyens de détermination d'au moins un état d'usage dudit foret en fonction de l'entrée dudit foret dans un élément à percer à chaque perçage d'un élément à percer comprenant au moins une couche et d'au moins une matière, la matière d'un élément à percer avec laquelle le foret entre en premier lieu en contact au cours d'une étape de perçage constituant une matière d'attaque, lesdits moyens de détermination d'au moins un état d'usage dudit foret comprenant pour chaque état d'usage :
- des moyens de prise en compte, lors de la détection de l'entrée dudit foret dans un élément à percer donné,
- de l'état d'usage calculé lors de la détection de l'entrée dudit foret dans l'élément à percer de l'étape de perçage précédente,
- d'une régression polynomiale prédéterminée de l'écart dudit critère de qualité auquel correspond l'état d'usage par rapport à une valeur souhaitée en fonction du cumul de détection de l'entrée dudit foret dans un élément à percer ladite régression polynomiale correspondant audit foret, à la matière d'attaque dudit élément à percer donné,
- de la fonction inverse de ladite régression polynomiale,
- des moyens de calcul d'une première valeur, résultant de ladite fonction inverse appliquée audit état d'usage calculé à l'étape de perçage précédente,
- des moyens de calcul d'une deuxième valeur, somme de la première valeur et de la nouvelle entrée,
- des moyens de calcul de l'état d'usage de fin de perçage dudit élément à percer donné, résultant de ladite régression polynomiale appliquée à la deuxième valeur.

19. Dispositif selon la revendication 11 à 18, comprenant une mémoire associée à chaque foret contenant :
- un seuil maximal d'au moins un état d'usage ;
- au moins une régression polynomiale :
- pour une matière donnée ;
- pour un critère de qualité donné ;
- pour un paramètre ayant une incidence sur l'usure donné ;
- au moins un état d'usage.

20. Dispositif selon l'une quelconque des revendications 11 à 19 dans lequel ledit au moins un critère de qualité d'un perçage appartient au groupe comprenant :
- les tolérances sur le diamètre du perçage ;
- l'état de surface des parois du perçage ;
- la perpendicularité de l'axe du perçage par rapport à la paroi à percer;
- la cylindricité du perçage ;
- la localisation du perçage ;
- la taille de la bavure formée sur l'élément à percer à l'issue d'un perçage ;
- le délaminage en sortie d'un trou réalisé à travers de la fibre de carbone.

## Patentansprüche

1. Verfahren zur Bewertung des Verschleißes eines Bohrers (13) während seiner gesamten Verwendung zum Durchführen der Bohrung von zu bohrenden Elementen, die aus mindestens einer Schicht und mindestens einem Material bestehen, wobei der Verschleiß des Bohrers (13) seine Fähigkeit zum Ausdruck bringt, eine Bohrung durchzuführen, die mindestens ein Qualitätskriterium einer Bohrung erfüllt, wobei das Verfahren mindestens umfasst:
- einen Schritt (115) zum Messen oder Erkennen mindestens eines Parameters, der eine Auswirkung auf den Verschleiß des Bohrers (13) aufweist, wobei der Parameter
- die Bohrtiefe ist, die von dem Bohrer (13) gebohrt wird; oder
- der Eintritt des Bohrers (13) in ein zu bohrendes Element ist;
- einen Schritt (160) zum Bestimmen mindestens eines Gebrauchszustands des Bohrers (13), wobei jeder Gebrauchszustand in Abhängigkeit von einem der Parameter bestimmt wird und charakteristisch für eines der Qualitätskriterien einer Bohrung ist;
**gekennzeichnet durch** das Bestimmen (160) mindestens eines Gebrauchszustands des Bohrers (13), der eine Gewichtung in Abhängigkeit von der Auswirkung der Abrasivität des/der durchbohrten Materials/Materialien auf den Verschleiß des Bohrers (13) umfasst, wobei im Rahmen dieser Gewichtung:
- jeder Gebrauchszustand einer Abweichung in Bezug auf einen gewünschten Wert des entsprechenden Qualitätskriteriums der Bohrung gleichgestellt wird;
- wobei die Abweichung in Abhängigkeit von der Kumulierung des entsprechenden Parameters variiert, der gemäß einer vorbestimmten Funktion eine Auswirkung auf den Verschleiß des Bohrers (13) aufweist.

2. Verfahren nach Anspruch 1, wobei jeder Gebrauchszustand einem vorbestimmten maximalen Schwellenwert zugeordnet ist, wobei der maximale Schwellenwert jedes dieser Gebrauchszustände kleiner oder gleich einem vorbestimmten maximalen Gebrauchszustand ist, über den hinaus das Qualitätskriterium, das den Gebrauchszustand charakterisiert, nicht mehr erfüllt ist.

3. Verfahren nach Anspruch 2, wobei jeder Gebrauchszustand einem vorbestimmten maximalen Schwellenwert zugeordnet ist, wobei der Schritt (160) zum Bestimmen mindestens eines Gebrauchszustands des Bohrers (13) im Laufe der Durchführung von Bohrungen eines zu bohrenden Elements mittels des Bohrers (13) in der Produktion die Einstufung des Bohrers (13) umfasst als:
- "nutzbarer Bohrer", solange der maximale Schwellenwert des mindestens einen Gebrauchszustands des Bohrers nicht erreicht ist;
- "Bohrer außer Betrieb" ab dem Zeitpunkt, an dem der maximale Schwellenwert von mindestens dem Gebrauchszustand des Bohrers (13) erreicht ist.

4. Verfahren nach Anspruch 3, das einen Schritt (121) des Ausgebens einer Nachricht umfasst, die angibt, dass der Bohrer (13) außer Betrieb ist, sobald dem Bohrer die Einstufung "außer Betrieb" zugewiesen wird.

5. Verfahren nach einem der Ansprüche 1 bis 4, das einen Schritt (1300) des vorhergehenden Bewertens im Labor von mindestens einem Typ von Bohrern (13) für mindestens ein Material umfasst, wobei der Schritt (1300) des Bewertens für jeden Typ von Bohrern (13) und für jedes Material umfasst:
- Durchführen (1331) mindestens einer Reihe von Bohrungen in Prüfkörpern, die aus dem Material gefertigt sind, mit einem neuen Bohrer des für jede der Reihen betrachteten Typs;
- Messen (1332), nach jedem der Bohrungen der mindestens einen Reihe, der Abweichung zwischen dem Wert des oder der einzelnen Qualitätskriterien in Bezug auf den gewünschten Wert, der dem betrachteten Kriterium entspricht;
- Speichern (1333), für das oder jedes der Qualitätskriterien, der Abweichung zwischen dem Wert des betrachteten Qualitätskriteriums im Verhältnis zu dem gewünschten Wert in Abhängigkeit von der Kumulierung des Parameters, der eine Auswirkung auf den Verschleiß des Bohrers (13) aufweist, der dem betrachteten Qualitätskriterium entspricht;
- Fortsetzen (1334) der Bohrungen der mindestens einen Reihe, bis das mindestens eine Qualitätskriterium nicht mehr erfüllt ist;
- wenn mehrere Reihen von Bohrungen durchgeführt werden, Berechnen (1335), für das oder jedes der Qualitätskriterien, des Durchschnitts der Abweichungen in Abhängigkeit von der Kumulierung des Parameters, der eine Auswirkung auf den Verschleiß des Bohrers (13) aufweist, der dem betrachteten Qualitätskriterium entspricht;
- Berechnen (1336), für das oder jedes der Qualitätskriterien, einer polynomen Regression der Abweichung oder des Durchschnitts der Abweichungen in Abhängigkeit von der Kumulierung des Parameters, der eine Auswirkung auf den Verschleiß des Bohrers (13) aufweist, der dem betrachteten Qualitätskriterium entspricht, wobei die polynome Regression die in der Gewichtung verwendete vorbestimmte Funktion darstellt.

6. Verfahren nach Anspruch 5, wobei jedem Bohrer (13) ein Speicher zugeordnet ist, wobei der Schritt (1300) des Bewertens einen Speicherschritt (135) im jedem Bohrer zugeordneten Speicher umfasst:
- des maximalen Schwellenwerts für mindestens einen Gebrauchszustand, der einem Qualitätskriterium und einem Parameter entspricht, der eine Auswirkung auf den Verschleiß aufweist;
- mindestens einer polynomen Regression:
- für ein gegebenes Material;
- für ein gegebenes Qualitätskriterium;
- für einen gegebenen Parameter, der eine Auswirkung auf den Verschleiß aufweist.

7. Verfahren nach dem Anspruch 5 oder 6, das im Laufe des Bohrens eines Elements, das aus einem Stapel von Schichten unterschiedlicher Materialien besteht, einen Schritt (160) zum Bestimmen von mindestens einem Gebrauchszustand des Bohrers (13) in Abhängigkeit von der Bohrtiefe am Ende des Bohrens jeder der Schichten umfasst, wobei der Schritt (160) zum Bestimmen mindestens eines Gebrauchszustands des Bohrers (13) am Ende des Bohrens einer Schicht für jeden Gebrauchszustand die folgenden Schritte umfasst:
- Berücksichtigen zu Beginn des Bohrens (162) einer gegebenen Schicht,
- des am Ende des Bohrens der vorherigen Schicht (1621) berechneten Gebrauchszustands;
- der polynomen Regression, die dem Bohrer (13), dem Material der gegebenen Schicht und dem Qualitätskriterium entspricht, das dem Gebrauchszustand in Abhängigkeit von der Bohrtiefe (1622) entspricht,
- der Umkehrfunktion der polynomen Regression (1623),
- Berechnen (163) eines ersten Wertes, der das Ergebnis der Umkehrfunktion ist, die auf den Gebrauchszustand am Ende des Bohrens der vorherigen Schicht berechnetenangewendet wird;
- Berücksichtigen (164) der gebohrten Dicke in der gegebenen Schicht,
- Berechnen (165) eines zweiten Wertes, der die Summe des ersten Wertes und der in die gegebene Schicht gebohrten Dicke ist,
- Berechnen (166) des Gebrauchszustands am Ende der Bohrung der gegebenen Schicht, der das Ergebnis aus der auf den zweiten Wert angewendeten polynomen Regression ist.

8. Verfahren nach dem Anspruch 5 oder 6, das aufeinanderfolgende Schritte zum Bohren von zu bohrenden Elementen umfasst, die mindestens eine Schicht und mindestens ein Material umfassen, wobei das Material eines zu bohrenden Elements, mit dem der Bohrer (13) als erstes im Laufe eines Bohrschrittes in Kontakt tritt, ein Ansatzmaterial darstellt, wobei das Verfahren im Laufe jedes Schrittes zum Bohren eines zu bohrenden Elements einen Schritt (160') zum Bestimmen von mindestens einem Gebrauchszustand des Bohrers (13) in Abhängigkeit von dem Eintritt des Bohrers (13) in ein zu bohrendes Element umfasst, wobei der Schritt (160') zum Bestimmen von mindestens eines Gebrauchszustands des Bohrers (13) für jeden Gebrauchszustand die folgenden Schritte umfasst:
- Berücksichtigen bei der Erkennung (1600) des Eintritts des Bohrers (13) in ein gegebenes zu bohrendes Element,
- des beim Erkennen des Eintritts des Bohrers (13) in das zu bohrende Element des vorherigen Bohrschritts (16001) berechneten Gebrauchszustands,
- der polynomen Regression, die dem Bohrer (13), dem Ansatzmaterial des gegebenen zu bohrenden Elements und dem Qualitätskriterium entspricht, das dem Gebrauchszustand in Abhängigkeit vom Erkennen des Eintritts des Bohrers (13) in ein zu bohrendes Element (16002) entspricht,
- der Umkehrfunktion der polynomen Regression (16003),
- Berechnen eines ersten Wertes, der das Ergebnis der Umkehrfunktion ist, die auf den im vorherigen Schritt zum Bohren (1601) berechneten Gebrauchszustand angewendet wird;
- Berechnen (1602) eines zweiten Wertes, Summe des ersten Wertes und des neuen Eintritts,
- Berechnen (1603) des Gebrauchszustands am Ende des Bohrens des gegebenen zu bohrenden Elements, der das Ergebnis aus der auf den zweiten Wert angewendeten polynomen Regression ist.

9. Verfahren nach Anspruch 7 oder 8, das weiter einen Schritt zum Speichern im jedem Bohrer (13) zugeordneten Speicher im Laufe seiner Verwendung zum Bohren von zu bohrenden Elementen mindestens eines Gebrauchszustands umfasst.

10. Verfahren nach einem der Ansprüche 1 bis 9, wobei das mindestens eine Qualitätskriterium einer Bohrung der Gruppe angehört, umfassend:
- die Toleranzen des Bohrungsdurchmessers;
- die Oberflächenbeschaffenheit der Bohrungswände;
- die Rechtwinkligkeit der Bohrachse in Bezug zur zu bohrenden Wand;
- die Zylindrizität der Bohrung;
- die Lokalisierung der Bohrung;
- die Größe des Grates, der sich am Ende des Bohrens auf dem zu bohrenden Element bildet;
- die Schichtablösung am Ausgang eines durch die Kohlefaser hindurch durchgeführten Loches.

11. Vorrichtung zur Bewertung des Verschleißes eines Bohrers (13) während seiner gesamten Verwendung zum Durchführen der Bohrung von zu bohrenden Elementen, die aus mindestens einer Schicht und mindestens einem Material bestehen, wobei der Verschleiß des Bohrers (13) seine Fähigkeit zum Ausdruck bringt, eine Bohrung durchzuführen, die mindestens ein Qualitätskriterium einer Bohrung erfüllt, wobei die Vorrichtung mindestens umfasst:
- Mittel zur Messung oder Erkennung mindestens eines Parameters, der eine Auswirkung auf den Verschleiß des Bohrers aufweist, wobei der Parameter
- die Bohrtiefe ist, die von dem Bohrer (13) gebohrt wird; oder
- der Eintritt des Bohrers (13) in ein zu bohrendes Element ist;
- Mittel zum Bestimmen mindestens eines Gebrauchszustands des Bohrers, wobei jeder Gebrauchszustand in Abhängigkeit von einem der Parameter bestimmt wird und charakteristisch für eines der Qualitätskriterien einer Bohrung ist.
**gekennzeichnet durch** die Mittel zum Bestimmen mindestens eines Gebrauchszustands des Bohrers, der eine Gewichtung in Abhängigkeit von der Auswirkung der Abrasivität des/der durchbohrten Materials/Materialien auf den Verschleiß des Bohrers vornehmen, wobei im Rahmen dieser Gewichtung:
- jeder Gebrauchszustand einer Abweichung in Bezug auf einen gewünschten Wert des entsprechenden Qualitätskriteriums der Bohrung gleichgestellt wird;
- wobei die Abweichung in Abhängigkeit von der Kumulierung des entsprechenden Parameters variiert, der gemäß einer vorbestimmten Funktion eine Auswirkung auf den Verschleiß des Bohrers (13) aufweist.

12. Vorrichtung nach Anspruch 11, wobei jeder Gebrauchszustand einem vorbestimmten maximalen Schwellenwert zugeordnet ist, wobei der maximale Schwellenwert jedes doeser Gebrauchszustände kleiner oder gleich einem vorbestimmten maximalen Gebrauchszustand ist, über den hinaus das Qualitätskriterium, das den Gebrauchszustand charakterisiert, nicht mehr erfüllt ist.

13. Vorrichtung nach Anspruch 12, umfassend Mittel zur Einstufung des Bohrers als:
- "nutzbarer Bohrer", solange der maximale Schwellenwert des mindestens einen Gebrauchszustands des Bohrers nicht erreicht ist;
- "Bohrer außer Betrieb" ab dem Zeitpunkt, an dem der maximale Schwellenwert von mindestens dem Gebrauchszustand des Bohrers erreicht ist.

14. Vorrichtung nach Anspruch 13, die Mittel zur Ausgabe einer Nachricht umfasst, die angibt, dass der Bohrer außer Betrieb ist, sobald dem Bohrer die Einstufung "außer Betrieb" zugewiesen wird.

15. Vorrichtung nach einem der Ansprüche 11 bis 14, wobei jeder Bohrer einem Speicher zugeordnet ist, der Folgendes enthält:
- mindestens ein Material oder mindestens eine Materialgruppe;
- einen maximalen Schwellenwert für jeden Gebrauchszustand, der für jedes Material oder jede Materialgruppe, jeden Parameter, der eine Auswirkung auf den Verschleiß aufweist, und jedes Qualitätskriterium eigen ist;
- mindestens einen Gebrauchszustand.

16. Vorrichtung nach Anspruch 15, umfassend Mittel zur Speicherung im dem Bohrer zugeordneten Speicher, während der Durchführung in der Produktion von Bohrungen mittels des Bohrers von zu bohrenden Elementen, die aus einem dasselbe bestimmten Material oder einer dasselbe bestimmten Gruppe von Materialien bestehen, mindestens eines Gebrauchszustands als die Kumulierung des Parameters, der eine Auswirkung auf den Verschleiß des Bohrers aufweist.

17. Vorrichtung nach einem der Ansprüche 11 bis 16, die Mittel zur Bestimmung von mindestens einem Gebrauchszustand des Bohrers in Abhängigkeit von der Bohrtiefe am Ende des Bohrens jeder der Schichten aus unterschiedlichen Materialien, aus denen ein zu bohrendes Element besteht, umfasst, wobei die Mittel zur Bestimmung von mindestens einem Gebrauchszustand des Bohrers am Ende des Bohrens einer Schicht für jeden Gebrauchszustand umfassen:
- Mittel zur Berücksichtigung zu Beginn des Bohrens einer gegebenen Schicht,
- des am Ende des Bohres der vorherigen Schicht berechneten Gebrauchszustands;
- einer vorbestimmten polynomen Regression der Abweichung des Qualitätskriteriums, das dem Gebrauchszustand entspricht, in Bezug auf einen gewünschten Wert in Abhängigkeit von der Kumulierung der Bohrtiefe des Bohrers, wobei die polynome Regression dem Bohrer, dem Material der gegebenen Schicht entspricht,
- der Umkehrfunktion der polynomen Regression,
- Mittel zur Berechnung eines ersten Wertes, der das Ergebnis der Umkehrfunktion ist, die am Ende des Bohrse der vorherigen Schicht berechneten Gebrauchszustand angewendet wird;
- Mittel zur Berücksichtigung der gebohrten Dicke in der gegebenen Schicht,
- Mittel zur Berechnung eines zweiten Wertes, der die Summe des ersten Wertes und der in die gegebene Schicht gebohrten Dicke ist,
- Mittel zur Berechnung des Gebrauchszustands am Ende der Bohrung der gegebenen Schicht, der das Ergebnis aus der auf den zweiten Wert angewendeten polynomen Regression ist.

18. Vorrichtung nach Anspruch 17, die Mittel zur Bestimmung mindestens eines Gebrauchszustands des Bohrers in Abhängigkeit vom Eintritt des Bohrers in ein zu bohrendes Element bei jedem Bohren eines zu bohrenden Elements umfasst, das mindestens eine Schicht und mindestens ein Material umfasst, wobei das Material eines zu bohrenden Elements, mit dem der Bohrer ales erstes im Laufe eines Bohrschrittes in Kontakt tritt, ein Ansatzmaterial darstellt, wobei die Mittel zur Bestimmung von mindestens einem Gebrauchszustand des Bohrers für jeden Gebrauchszustand umfassen:
- Mittel zur Berücksichtigung bei der Erkennung des Eintritts des Bohrers in ein gegebenes zu bohrendes Element,
- des beim Erkennen des Eintritts des Bohrers in das zu bohrende Element des vorherigen Bohrschritts berechneten Gebrauchszustands,
- einer vorbestimmten polynomen Regression der Abweichung des Qualitätskriteriums, das dem Gebrauchszustand entspricht, in Bezug auf einen gewünschten Wert in Abhängigkeit von der Erkennungskumulierung des Eintritts des Bohrers in ein zu bohrendes Element, wobei die polynome Regression dem Bohrer, dem Ansatzmaterial des gegebenen zu bohrenden Elements entspricht,
- der Umkehrfunktion der polynomen Regression,
- Mittel zur Berechnung eines ersten Wertes, der das Ergebnis der Umkehrfunktion ist, die auf den im vorherigen Bohrschritt berechneten Gebrauchszustand angewendet wird,
- Mittel zur Berechnung eines zweiten Wertes, Summe des ersten Wertes und des neuen Eintritts,
- Mittel zur Berechnung des Gebrauchszustands am Ende des Bohrens des gegebenden zu bohrenden Elements, welches das Ergebnis der auf den zweiten Wert angewendeten polynomen Regression ist.

19. Vorrichtung nach Anspruch 11 bis 18, umfassend einen jedem Bohrer zugeordneten Speicher, der Folgendes enthält:
- einen maximalen Schwellenwert von mindestens einem Gebrauchszustand;
- mindestens eine polynomiale Regression:
- für ein gegebenes Material;
- für ein gegebenes Qualitätskriterium;
- für einen gegebenen Parameter, der sich auf den Verschleiß auswirkt;
- mindestens einen Gebrauchszustand.

20. Vorrichtung nach einem der Ansprüche 11 bis 19, wobei das mindestens eine Qualitätskriterium einer Bohrung der Gruppe angehört, umfassend:
- die Toleranzen des Bohrungsdurchmessers;
- die Oberflächenbeschaffenheit der Bohrungswände;
- die Rechtwinkligkeit der Bohrachse in Bezug zur zu bohrenden Wand;
- die Zylindrizität der Bohrung;
- die Lokalisierung der Bohrung;
- die Größe des Grates, der sich nach dem Bohren auf dem zu bohrenden Element bildet;
- die Schichtablösung am Ausgang eines durch die Kohlefaser hindurch durchgeführten Loches.

## Claims

1. A method for assessing the wear of a drill bit (13) throughout its use for drilling elements to be drilled comprising at least one layer and of at least one material, the wear of said drill bit (13) reflecting its ability to perform a drilling which meets at least one quality criterion of a drilling, said method comprising at least:
- a step (115) of measuring or detecting at least one parameter having an impact on the wear of said drill bit (13), said parameter being
- the drilling depth drilled by said drill bit (13); or
- the entry of said drill bit (13) into an element to be drilled;
- a step of determining (160) at least one state of wear of said drill bit (13), each state of wear being determined according to one of said parameters and being characteristic of one of said quality criteria for a drilling;
**characterised by** determining (160) at least one state of wear of said drill bit (13) comprising a weighting based on the effect of the abrasiveness of the drilled material(s) on the wear of the drill bit (13), as part of this weighting:
- each state of wear being assimilated to a deviation from a desired value of said quality criterion of the corresponding drilling;
- said deviation varying according to the sum of said corresponding parameter having an impact on the wear of said drill bit (13) according to a predetermined function.

2. A method according to claim 1, wherein each state of wear is associated with a predetermined maximum threshold, said maximum threshold for each of the said states of wear being less than or equal to a predetermined maximum state of wear beyond which the quality criterion characteristic of said state of wear is no longer met.

3. Method according to claim 2, wherein each state of wear is associated with a predetermined maximum threshold, said step of determining (160) at least one state of wear of said drill bit (13) comprising, during the making in production of drillings of an element to be drilled using said drill bit (13), the qualification of said drill bit (13) as:
- "serviceable drill bit" as long as said maximum threshold of said at least one state of wear of said drill bit has not been reached;
- "drill bit out of service" from the moment the maximum threshold of at least the state of wear of said drill bit (13) has been reached.

4. A method according to claim 3, comprising a step (121) of transmitting a message indicating that the drill bit (13) is out of service as soon as the qualification "out of service" is attributed to the drill bit.

5. A method according to any one of claims 1 to 4, comprising a preliminary laboratory evaluation step (1300) of at least one type of drill bit (13) for at least one material, said evaluation step (1300) comprising for each type of drill bit (13) and for each material:
- making (1331) at least one series of drillings in test pieces made of said material with a new drill bit of the type considered in each of said series;
- measuring (1332), after each of the drillings of said at least one series, the deviation between the value of said quality criterion or each of said quality criteria with respect to said desired value corresponding to the criterion considered;
- recording (1333), for said or each of said quality criteria, the deviation between the value of the quality criterion considered with respect to said desired value according to the accumulation of the parameter having an impact on the wear of said drill bit (13) corresponding to the quality criterion considered;
- continuing (1334) drillings of said at least one series until said at least one quality criterion is no longer met;
- when several series of drillings are made, calculating (1335) for said or each of said quality criteria the average of said deviations according to the sum of the parameter having an impact on the wear of said drill bit (13) corresponding to the quality criterion considered;
- calculating (1336) for said or each of said quality criteria a polynomial regression of said deviation or the average of said deviations according to the accumulation of the parameter having an impact on the wear of said drill bit (13) corresponding to the quality criterion considered, said polynomial regression constituting said predetermined function used in said weighting.

6. A method according to claim 5, a memory being associated with each drill bit (13), said evaluation step (1300) comprising a recording step (135) in the memory associated with each drill bit of:
- the maximum threshold for at least one state of wear specific to a quality criterion and to a parameter having an impact on the wear;
- at least one polynomial regression:
- for a given material;
- for a given quality criterion;
- for a parameter having an impact on the given wear.

7. A method according to claim 5 or 6 comprising, during the drilling of an element made of a stack of layers of different materials, a step (160) of determining at least one state of wear of said drill bit (13) based on the drilling depth at the end of the drilling of each of said layers, the step (160) of determining at least one state of wear of said drill bit (13) at the end of the drilling of a layer comprising for each state of wear the following steps:
- taking account, at the beginning of drilling (162) of a given layer, of
- the state of wear calculated after drilling the previous layer (1621);
- the polynomial regression corresponding to said drill bit (13), to the material of the given layer, and to the quality criterion to which the state of wear corresponds according to the drilled depth (1622),
- the inverse function of said polynomial regression (1623),
- calculating (163) a first value, being the result of said inverse function applied to said state of wear calculated at the end of the drilling of the previous layer;
- taking into account (164) the thickness drilled in said given layer,
- calculating (165) a second value, being the sum of the first value and of said thickness drilled in said given layer,
- calculating (166) the state of wear at the end of the drilling of said given layer, resulting from said polynomial regression applied to the second value.

8. A method according to claim 5 or 6 comprising successive steps of drilling elements to be drilled comprising at least one layer and of at least one material, the material of an element to be drilled with which the drill bit (13) first comes into contact during a drilling step constituting a striking material, said method comprising during each drilling step of an element to be drilled a step (160') of determining at least one state of wear of said drill bit (13) depending on the entry of the said drill bit (13) into an element to be drilled, the step (160') of determining of at least one state of wear of the drill bit (13) comprising for each state of wear the following steps:
- taking into account, when detecting (1600) the entry of said drill bit (13) into a given element to be drilled,
- the state of wear calculated when detecting the entry of said drill bit (13) into the element to be drilled of the previous drilling step (16001),
- the polynomial regression corresponding to said drill bit (13), to the striking material of said given element to be drilled, and to the quality criterion to which said state of wear corresponds according to the detection of the entry of said drill bit (13) into an element to be drilled (16002),
- the inverse function of said polynomial regression (16003),
- calculating a first value, resulting from said inverse function applied to said state of wear calculated in the previous drilling step (1601),
- calculating (1602) a second value, being the sum of the first value and the new entry,
- calculating (166) the state of wear at the end of the drilling of said element to be drilled, resulting from said polynomial regression applied to the second value.

9. A method according to claim 7 or 8, further comprising a step of recording in the memory associated with each drill (13) during its use for drilling elements to be drilled of at least one state of wear.

10. A method according to any one of claims 1 to 9, wherein said at least one quality criterion of a drilling belongs to the group comprising:
- the tolerances on the diameter of the drilling;
- the surface condition of the walls of the drilling;
- the perpendicularity of the drilling axis with respect to the wall to be drilled;
- the cylindricity of the drilling;
- the location of the drilling;
- the size of the burr formed on the element to be drilled after drilling;
- the delamination at the exit of a hole made through the carbon fibre.

11. Device for assessing the wear of a drill bit (13) throughout its use for drilling elements to be drilled comprising at least one layer and of at least one material, the wear of said drill bit (13) reflecting its ability to perform a drilling which meets at least one quality criterion of a drilling, said method comprising at least:
- means for measuring or detecting at least one parameter having an impact on the wear of said drill bit, said parameter being
- the drilling depth drilled by said drill bit (13); or
- the entry of said drill bit (13) into an element to be drilled;
- means for determining at least one state of wear of said drill bit, each state of wear being determined according to one of said parameters and being characteristic of one of said quality criteria of a drilling.
**characterised by** said means for determining at least one state of wear of said drill bit, performing a weighting based on the effect of the abrasiveness of the drilled material(s) on the wear of the drill, as part of this weighting:
- each state of wear being assimilated to a deviation from a desired value of said quality criterion of the corresponding drilling;
- said deviation varying according to the accumulation of said corresponding parameter having an impact on the wear of said drill according to a predetermined function.

12. Device according to claim 11, wherein each state of wear is associated with a predetermined maximum threshold, said maximum threshold of each of the said modes of wear being less than or equal to a predetermined maximum state of wear beyond which the quality criterion characteristic of said state of wear is no longer met.

13. Device according to claim 12, comprising means for qualifying said drill bit as:
- "serviceable drill bit" as long as said maximum threshold of said at least one state of wear of said drill bit has not been reached;
- "drill bit out of service" from the moment the maximum threshold of at least one state of wear of said drill bit has been reached.

14. Device according to claim 13, comprising means for transmitting a message indicating that the drill bit is out of service as soon as the qualification "out of service" is attributed to the drill bit.

15. Device according to any one of claims 11 to 14, wherein each drill bit is associated with a memory containing:
- at least one material or at least one group of materials;
- a maximum threshold for each state of wear specific to each material or group of materials, to each parameter having an impact on the wear and to each quality criterion;
- at least one state of wear.

16. Device according to claim 15, comprising means for recording in the memory associated with said drill bit, during making in production, using said drill bit, drillings of elements to be drilled made from a same given material or a same given group of materials, at least one state of wear as being the accumulation of said corresponding parameter affecting the wear of said drill bit.

17. Device according to any one of claims 11 to 16 comprising means for determining at least one state of wear of said drill bit based on the drilling depth at the end of the drilling of each of said different material layers from which an element to be drilled is composed, said means for determining at least one state of wear of said drill bit at the end of the drilling of a layer comprising for each state of wear:
- means of taking account, at the start of drilling a given layer, of
- the state of wear calculated at the end of drilling the previous layer;
- a predetermined polynomial regression of the deviation of said quality criterion to which the state of wear corresponds with respect to a desired value according to the accumulation of the drilling depth of said drill bit, said polynomial regression corresponding to said drill bit, to the material of the given layer,
- the inverse function of said polynomial regression,
- means for calculating a first value, resulting from said inverse function applied to said state of wear calculated at the end of the drilling of the previous layer;
- means of taking into account the thickness pierced in the said given layer,
- means for calculating a second value, the sum of the first value and said thickness drilled in said given layer,
- means for calculating the state of wear of said given layer at the end of the drilling, resulting from said polynomial regression applied to the second value.

18. Device according to claim 17 comprising means for determining at least one state of wear of said drill bit based on the entry of said drill bit into an element to be drilled for each drilling of an element to be drilled comprising at least one layer and of at least one material, the material of an element to be drilled with which the drill bit first comes into contact during a drilling step constituting a striking material, the said means of determining at least one state of wear of said drill bit comprising for each state of wear:
- means for taking account, when detecting the entry of said drill bit into a given element to be drilled, of
- the state of wear calculated when the entry of said drill bit into the element to be drilled of the previous drilling step is detected,
- a predetermined polynomial regression of the deviation of said quality criterion to which the state of wear corresponds with respect to a desired value according to the cumulative detection of the entry of said drill bit into a drill bit element said polynomial regression corresponding to said drill bit, to the striking material of said given element to be drilled,
- the inverse function of said polynomial regression,
- means of calculating a first value, resulting from the said inverse function applied to the calculated state of wear at the previous drilling step,
- means of calculating a second value, being the sum of the first value and the new entry,
- means for calculating state of wear at the end of the drilling of said given element to be drilled, resulting from said polynomial regression applied to the second value.

19. Device according to claims 11 to 18, comprising a memory associated with each drill bit containing:
- a maximum threshold of at least one state of wear;
- at least one polynomial regression:
- for a given material;
- for a given quality criterion;
- for a parameter having an impact on the given wear;
- at least one state of wear.

20. Device according to any one of claims 11 to 19, wherein said at least one quality criterion of a drilling belongs to the group comprising:
- the tolerances on the diameter of the drilling;
- the surface condition of the walls of the drilling;
- the perpendicularity of the drilling axis with respect to the wall to be drilled;
- the cylindricity of the drilling;
- the location of the drilling;
- the size of the burr formed on the element to be drilled following a drilling;
- the delamination at the exit of a hole made through the carbon fibre.
